# EUROPEAN PATENT APPLICATION

(11) **EP 4 700 525 A1**
(43) Date of publication of application: **25.02.2026**
(21) Application number: 24792167.9
(22) Date of filing: 22.04.2024
(51) Int. Cl.: G05D 1/43

(54) **CONTROL METHOD FOR SELF-MOVING DEVICE, AND STORAGE MEDIUM AND SELF-MOVING DEVICE**

(30) Priority: 21.04.2023 CN 202310436838; 22.05.2023 CN 202310577496; 30.05.2023 CN 202310623038; 01.12.2023 CN 202311633637; 27.02.2024 CN 202410214350
(71) Applicant: Positec Power Tools (Suzhou) Co., Ltd., Suzhou, Jiangsu 215123 (CN)
(72) Inventor: WANG, Yuanyuan, Suzhou, Jiangsu 215123 (CN); ZHOU, Bin, Suzhou, Jiangsu 215123 (CN)
(74) Representative: Kilburn & Strode LLP
(86) International application number: PCT/CN2024/089069
(87) International publication number: WO 2024/217584

(57) **Abstract**

The present application relates to a control method, a storage medium and an autonomous moving device, wherein the control method is for the autonomous moving device, the autonomous moving device is configured to travel and/or work in a working area, and the control method comprises: obtaining an image of the working area; detecting a target area in the working area based on the image, the target area being a local area in the working area, and a distance between opposite sides of the target area being less than a threshold; determining a width of the target area; and controlling an angle and/or a distance between the autonomous moving device and a boundary of the target area based on the width of the target area.

## Description

### TECHNICAL FIELD

The present application relates to control method for autonomous moving device, storage medium and autonomous moving device.

### BACKGROUND

With a gradual popularization of intelligent devices in a daily life, autonomous moving devices (for example, an automatic lawn mower for a garden repair and a cleaning robot for a home floor cleaning) are also welcomed by users.

A handheld or push-type lawn mower requires a manual pushing during a working process, which occupies a very large amount of manpower and time, and a manual cost is very high. An intelligent autonomous moving device can automatically move and/or work in a working area. Taking an automatic lawn mower as an example, the automatic lawn mower can automatically travel on a lawn of a user's home and perform a cutting operation, so as to realize an automatic cutting of the lawn, which can greatly save the manpower. A current automatic lawn mower has a limited flexibility when processing some special areas, which may cause a missed cutting or a repeated cutting of these special areas, damage an aesthetic of the lawn, and reduce a comfort of a user.

### SUMMARY

In order to overcome defects of a prior art, a problem to be solved by embodiments of the present disclosure is to improve a cutting coverage and improve an operation flexibility of an autonomous moving device.

In one embodiment, a control method for an autonomous moving device is provided, the autonomous moving device is configured to travel and/or work in a working area, and the control method comprises:
obtaining an image of the working area;
detecting a target area in the working area based on the image, the target area being a local area in the working area, and a distance between opposite sides of the target area being less than a threshold;
determining a width of the target area; and
controlling an angle and/or a distance between the autonomous moving device and a boundary of the target area based on the width of the target area.

In one embodiment, the control method comprises:
determining a working mode of the autonomous moving device;
the controlling an angle and/or a distance between the autonomous moving device in the target area based on the width of the target area comprises:
controlling the angle and/or the distance between the autonomous moving device and the boundary of the target area based on whether the width of the target area satisfies a width requirement corresponding to the working mode.

In one embodiment, the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is not less than a first preset value, controlling the autonomous moving device to move along the boundary of the target area according to a first moving path, a distance between the first moving path and the boundary of the target area being less than or equal to a first distance.

In one embodiment, the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is less than a first preset value and greater than or equal to a second preset value, controlling the autonomous moving device to move along a middle position between opposite two lateral boundaries of the target area.

In one embodiment, the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is less than a second preset value, controlling the autonomous moving device to leave the target area.

In one embodiment, the controlling the angle and/or the distance between the autonomous moving device and the boundary of the target area based on whether the width of the target area satisfies the width requirement corresponding to the working mode comprises:
when the autonomous moving device is in an internal cutting mode, and when the width of the target area is not less than a third preset value, controlling the autonomous moving device to move within the target area according to a random moving path or a planned moving path.

In one embodiment, the controlling the angle and/or the distance between the autonomous moving device and the boundary of the target area based on whether the width of the target area satisfies the width requirement corresponding to the working mode comprises:
when the autonomous moving device is in an internal cutting mode, and when a width is less than a third preset value and greater than or equal to a fourth preset value, determining a boundary-following distance;
determining a boundary-approaching path according to the boundary-following distance, the boundary-following distance representing a distance between the boundary-approaching path and the boundary of the target area; and
controlling the autonomous moving device to move and/or work according to the boundary-approaching path.

In one embodiment, the boundary-following distance is variably selected within a certain width range.

In one embodiment, the controlling the angle and/or the distance between the autonomous moving device and the boundary of the target area based on whether the width of the target area satisfies the width requirement corresponding to the working mode comprises:
when the autonomous moving device is in an internal cutting mode, and when the width of the target area is less than a fourth preset value, controlling the autonomous moving device to leave the target area.

In one embodiment, the controlling the angle and/or the distance between the autonomous moving device and the boundary of the target area based on whether the width of the target area satisfies the width requirement corresponding to the working mode comprises:
when the working mode is an internal cutting mode, and when the width of the target area is not less than a third preset value, controlling the autonomous moving device to turn at an angle within a first angle range when approaching or reaching the boundary of the target area, an upper limit value of the first angle range being less than an upper limit value of a second angle range, the second angle range being an angle range selected for the autonomous moving device to turn when approaching or reaching a boundary of a non-target area.

In one embodiment, the controlling the angle and/or the distance between the autonomous moving device and the boundary of the target area based on whether the width of the target area satisfies the width requirement corresponding to the working mode further comprises:
when the working mode is an internal cutting mode, and when the width of the target area is not less than a third preset value, controlling the autonomous moving device to move in the target area according to a random moving path;
detecting a first positional relationship between the autonomous moving device and the boundary of the target area based on the image;
determining whether the autonomous moving device satisfies a predetermined boundary-approaching condition based on the first positional relationship, and if a determination result is yes, controlling the autonomous moving device to turn at an angle in the first angle range to move away from the boundary of the working area;
detecting a second positional relationship between the autonomous moving device after moving away from the boundary of the target area and the boundary of the target area based on the image; and
determining whether the autonomous moving device satisfies the predetermined boundary-approaching condition based on the second positional relationship, and if a determination result is yes, controlling the autonomous moving device to turn at an angle in a third angle range to move away from the boundary of the target area, wherein an upper limit value of the third angle range is less than the upper limit value of the first angle range.

In one embodiment, the controlling the angle and/or the distance between the autonomous moving device and the boundary of the target area based on the width of the target area comprises:
when the width of the target area is greater than or equal to an enterable preset value, controlling the autonomous moving device to enter the target area; and
when the width of the target area is less than the enterable preset value, controlling the autonomous moving device not to enter the target area.

In one embodiment, the control method further comprises:
detecting a boundary of the working area based on the image; and
determining whether the width of the target area is greater than or equal to an enterable preset value based on the boundary of the working area.

In one embodiment, the determining whether the width of the target area is greater than or equal to the enterable preset value based on the boundary of the working area comprises:
identifying that a lateral boundary of the working area is discontinuous, a distance between the discontinuous lateral boundary representing the width of the target area, the lateral boundary being a boundary of the working area along which the autonomous moving device moves.

In one embodiment, the control method further comprises: when the distance between the discontinuous lateral boundary is less than an enterable preset value, controlling the autonomous moving device to move based on the lateral boundary after an interruption.

In one embodiment, the determining whether the width of the target area is greater than or equal to an enterable preset value based on the boundary of the working area comprises:
identifying opposite two lateral boundaries in the working area, a distance between the two lateral boundaries representing the width of the target area, the opposite lateral boundaries being boundaries of the working area located on two sides in a width direction of the autonomous moving device.

In one embodiment, the control method comprises:
determining the width of the target area;
the determining the width of the target area comprises: identifying the width of the target area based on an image of the working area.

In one embodiment, the identifying the width of the target area based on the image of the working area comprises:
detecting a boundary of the working area based on the image; and identifying the width of the target area based on a distance between opposite lateral boundaries, the lateral boundaries being boundaries of the working area located at a side of the autonomous moving device.

In one embodiment, the control method comprises:
determining the width of the target area;
the determining the width of the target area comprises: detecting a number of turns of the autonomous moving device in the target area within a certain period of time, and comparing the number of turns with a preset number threshold to identify the width of the target area.

In one embodiment, an autonomous moving device is provided, the autonomous moving device is configured to travel and/or work in a working area, and the autonomous moving device comprises:
an imaging sensor, configured to capture an image of the working area; and
a controller, configured to obtain the image of the working area, and detect a target area in the working area based on the image, the target area being a local area in the working area, and a distance between opposite sides of the target area being less than a threshold;
the controller is further configured to determine a width of the target area, and control an angle and/or a distance between the autonomous moving device and the target area based on the target area.

It should be noted that, the imaging sensor may be a camera or the like.

In one embodiment, a computer-readable storage medium is provided, the storage medium stores a computer program, and the computer program is used for performing any one of the methods.

In one embodiment, a control method is provided, which is applied to an autonomous moving device, the autonomous moving device is configured to travel and/or work in a working area, the autonomous moving device is provided with a camera, and the control method comprises:
determining a working mode of the autonomous moving device;
obtaining an image of the working area captured by the camera;
detecting a target area and determining a detection result based on the image of the working area, the target area being a local area in the working area, and a distance between two sides of the target area being less than a threshold; and
when the detection result is that the target area is detected, controlling a moving path of the autonomous moving device in the target area according to the working mode.

In one embodiment, the detecting a target area and determining a detection result based on the image of the working area comprises:
performing an image recognition processing on the image of the working area to determine an image recognition result; and
determining the detection result based on the working mode and the image recognition result.

In one embodiment, the determining the detection result based on the working mode and the image recognition result comprises:
when the working mode is an internal cutting mode, and the image recognition result is that a boundary of a working area with a relative position is recognized, determining that the detection result is that the target area is detected.

In one embodiment, the determining the detection result based on the working mode and the image recognition result comprises:
when the working mode is a boundary-following mode, and the image recognition result is that a front boundary is recognized and a lateral boundary is not recognized, determining that the detection result is that the target area is detected, the front boundary being a boundary of a working area located in front of the autonomous moving device, and the lateral boundary being a boundary of the working area located at a side of the autonomous moving device.

In one embodiment, the controlling a moving path of the autonomous moving device in the target area according to the working mode when the detection result is that the target area is detected comprises:
when the target area is detected and the working mode is an internal cutting mode, controlling a distance between the autonomous moving device and a boundary of the target area to be greater than a first distance.

In one embodiment, the controlling the distance between the autonomous moving device and the boundary of the target area to be greater than the first distance comprises:
determining a second moving path according to the image of the working area, a distance between the second moving path and the boundary of the target area being greater than the first distance; and
controlling the autonomous moving device to move and/or work according to the second moving path.

In one embodiment, the determining the second moving path according to the image of the working area comprises:
generating a first map according to the image of the working area, the first map comprising map information of the target area; and
determining the second moving path according to the first map.

In one embodiment, the controlling the moving path of the autonomous moving device in the target area according to the working mode when the detection result is that the target area is detected comprises:
when the target area is detected and the working mode is an internal cutting mode, determining a width of the target area; and
controlling the moving path of the autonomous moving device in the target area according to the width.

In one embodiment, the controlling the moving path of the autonomous moving device in the target area according to the width comprises:
when the width is not less than a preset reference value, randomly determining a random distance, the preset reference value being less than the threshold;
determining a random moving path according to the random distance and the image of the working area, the random distance representing a distance between the random moving path and a boundary of the target area; and
controlling the autonomous moving device to move and/or work according to the random moving path.

In one embodiment, the controlling the moving path of the autonomous moving device in the target area according to the width comprises:
when the width is less than a preset reference value, determining a middle moving path according to the image of the working area, the middle moving path being located in a middle of opposite two lateral boundaries of the target area; and
controlling the autonomous moving device to move and/or work according to the middle moving path.

In one embodiment, the controlling the moving path of the autonomous moving device in the target area according to the working mode when the detection result is that the target area is detected comprises:
when the target area is detected and the working mode is a boundary-following mode, controlling the autonomous moving device to turn; and
controlling the autonomous moving device to move along a boundary of the target area.

In one embodiment, the controlling the autonomous moving device to turn comprises: controlling the autonomous moving device to turn towards a first boundary of the target area, the first boundary being a boundary with a shortest distance from the autonomous moving device in the target area; and
the controlling the autonomous moving device to move along the boundary of the target area comprises: controlling the autonomous moving device to move along the first boundary.

In one embodiment, the controlling the autonomous moving device to move along the boundary of the target area comprises:
determining a third moving path according to the image of the working area, a distance between the third moving path and the boundary of the target area being less than a second distance; and
controlling the autonomous moving device to move according to the third moving path.

In one embodiment, the determining the third moving path according to the image of the working area comprises:
performing a segmentation processing on the image of the working area to determine an image sub-region;
determining, in the image sub-region, a target sub-region that satisfies a preset condition, the preset condition comprising that the image sub-region comprises an image corresponding to a first boundary, or, the preset condition comprising that a distance between a space corresponding to the image sub-region and the autonomous moving device is less than a third distance; and
determining the third moving path according to the target sub-region.

In one embodiment, the determining the third moving path according to the image sub-region comprises:
generating a second map according to the image sub-region, the second map comprising map information of the target area; and
determining the third moving path according to the second map.

In one embodiment, a control apparatus is provided, which is applied to an autonomous moving device, the autonomous moving device is configured to travel and/or work in a working area, the autonomous moving device is provided with a camera, and the control apparatus comprises:
a first determining module, configured to determine a working mode of the autonomous moving device;
a first obtaining module, configured to obtain an image of the working area captured by the camera;
a second determining module, configured to detect a target area and determine a detection result based on the image of the working area, the target area being a local area in the working area, and a distance between two sides of the target area being less than a threshold; and
a control module, configured to, when the detection result is that the target area is detected, control a moving path of the autonomous moving device in the target area according to the working mode.

In one embodiment, a computer-readable storage medium is provided, the storage medium stores a computer program, and the computer program is used for performing the method.

In one embodiment, an autonomous moving device is provided, comprising:
a processor;
a memory for storing processor-executable instructions; and
the processor, configured to perform the method.

The embodiments of the present disclosure can improve a cutting coverage and improve a user satisfaction.

### BRIEF DESCRIPTION OF DRAWINGS

The above-mentioned objects, technical solutions and beneficial effects of the present application can be clearly obtained through a following detailed description of specific embodiments that can realize the present application, in combination with a description of accompanying drawings.

Same reference numerals and symbols in the drawings and the specification are used to represent same or equivalent elements.
FIG. 1 is a schematic structural diagram of an autonomous moving device provided by an embodiment of the present application;
FIG. 2 is a module diagram of an embodiment of the present application;
FIG. 3 is a flowchart of a control method for an autonomous moving device provided by an exemplary embodiment of the present application;
FIG. 4 is a schematic flowchart of determining whether an autonomous moving device can enter a target area provided by an exemplary embodiment of the present application;
FIG. 5a is a schematic diagram of a scenario of detecting a width of a target area by using an interrupted lateral boundary, which is applicable to an embodiment of the present application;
FIG. 5b is a schematic diagram of a scenario of detecting a width of a target area by using an interrupted lateral boundary, which is applicable to an embodiment of the present application;
FIG. 6a is a schematic diagram of a scenario of detecting a width of a target area by using opposite lateral boundaries in a middle, which is applicable to an embodiment of the present application;
FIG. 6b is a schematic diagram of a scenario of detecting a width of a target area by using opposite lateral boundaries in a middle, which is applicable to an embodiment of the present application;
FIG. 7 is a schematic flowchart of controlling a moving path of an autonomous moving device in a target area based on a width of the target area, provided by an exemplary embodiment of the present application;
FIG. 8 is a schematic diagram of an autonomous moving device moving in a middle of opposite two lateral boundaries of a target area in a boundary-following mode, provided by an exemplary embodiment of the present application;
FIG. 9 is a schematic diagram of an autonomous moving device moving in a target area in a random moving path in an internal cutting mode, provided by an exemplary embodiment of the present application;
FIG. 10 is a schematic diagram of an autonomous moving device moving along a boundary at different boundary-following distances in a target area in an internal cutting mode, provided by an exemplary embodiment of the present application;
FIG. 11 is a schematic flowchart of identifying a width of a target area, provided by an exemplary embodiment of the present application;
FIG. 12 is a schematic diagram of a lawn mower moving in a working area, provided by an exemplary embodiment of the present application;
FIG. 13 is a schematic diagram of a lawn mower encountering a target area in an internal cutting mode, provided by an exemplary embodiment of the present application;
FIG. 14 is a schematic diagram of a second moving path of a lawn mower in a target area, provided by an exemplary embodiment of the present application;
FIG. 15 is a schematic diagram of a lawn mower encountering a target area in a boundary-following mode, provided by an exemplary embodiment of the present application;
FIG. 16 is a schematic diagram of a lawn mower turning when encountering a target area in a boundary-following mode, provided by an exemplary embodiment of the present application;
FIG. 17 is a schematic diagram of a lawn mower moving along a boundary of a target area in a boundary-following mode, provided by an exemplary embodiment of the present application;
FIG. 18 is a schematic diagram of an autonomous moving device moving in another working area, provided by an exemplary embodiment of the present application;
FIG. 19 is a schematic diagram of an autonomous moving device moving along a boundary of a working area, provided by an exemplary embodiment of the present application;
FIG. 20 is a schematic diagram of an autonomous moving device moving in an arc, provided by an exemplary embodiment of the present application;
FIG. 21 is a schematic diagram of an autonomous moving device moving along a boundary of a target area in a working area, provided by an exemplary embodiment of the present application;
FIG. 22 is a schematic diagram of an autonomous moving device moving along a boundary based on a fourth distance in a target area with a slightly larger width, provided by an exemplary embodiment of the present application;
FIG. 23 is a schematic diagram of an autonomous moving device moving along a boundary based on a larger boundary-following distance in a target area with a slightly smaller width;
FIG. 24 is a schematic diagram of an autonomous moving device moving along a boundary based on a fifth distance in a target area with a slightly smaller width, provided by an exemplary embodiment of the present application.

### DETAILED DESCRIPTION

For a better understanding of the present application, the present application will be described more comprehensively with reference to relevant accompanying drawings. Preferred embodiments of the present application are given in the accompanying drawings. However, the present application may be implemented in many different forms and is not limited to the embodiments described herein. On the contrary, these embodiments are provided for a more thorough and comprehensive understanding of the disclosure of the present application. The embodiments provided in this specification may be combined with each other.

In the present application, unless otherwise specified and limited, terms such as "installation", "connection", "coupling", and "fixing" should be understood in a broad sense. For example, the connection may be a fixed connection, a detachable connection, or an integrated connection; the connection may be a mechanical connection or an electrical connection; the connection may be a direct connection or an indirect connection through an intermediate medium, and may be an internal communication between two elements or an interaction relationship between two elements, unless otherwise specified. For those of ordinary skill in the art, specific meanings of the above terms in the present application may be understood according to specific situations.

The terms "first" and "second" are used for descriptive purposes only, and cannot be understood as indicating or implying a relative importance or implicitly indicating a number of indicated technical features. Thus, a feature defined by "first" or "second" may explicitly or implicitly include at least one of the feature. In the description of the present application, a meaning of "a plurality of" is at least two, for example, two, three, etc., unless otherwise specified.

Unless otherwise defined, all technical and scientific terms used herein have same meanings as commonly understood by one of ordinary skill in the art to which the present application belongs. The terms used in the specification of the present application are for a purpose of describing specific embodiments only, and are not intended to limit the present application. The term "and/or" used herein includes any and all combinations of one or more of associated listed items.

An embodiment provides an autonomous moving device 10, a control method, and a computer-readable storage medium. The autonomous moving device 10 may be an automatic lawn mower, an automatic vacuum cleaner, an automatic mopping machine, an automatic snow remover, or other intelligent device capable of automatic movement. The autonomous moving device 10 can automatically move and perform a corresponding work in a specified working area 103, and can also return to a docking station 102 along a boundary corresponding to the working area 103 for docking or charging.

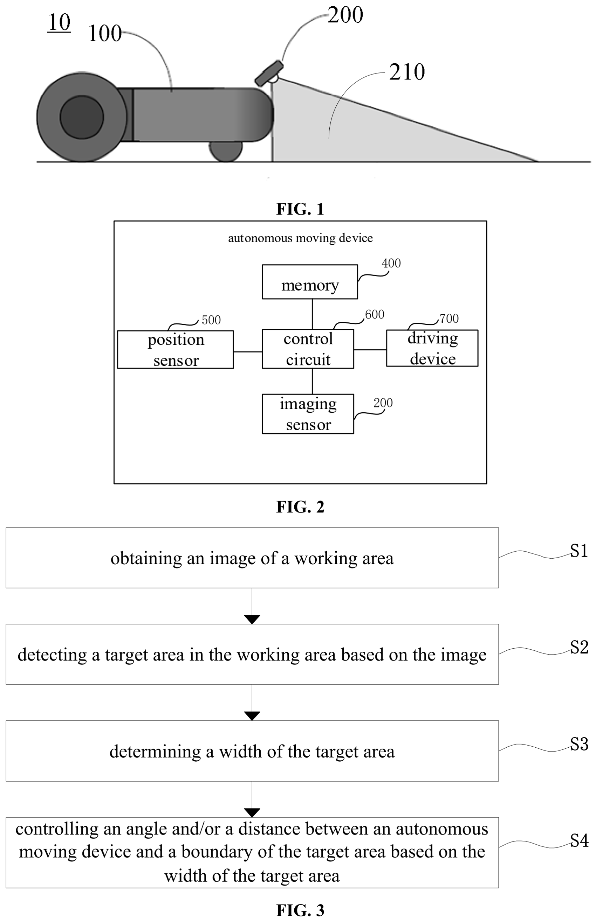

This embodiment provides an autonomous moving device 10. As shown in FIG. 1 and FIG. 2, the autonomous moving device 10 comprises a machine body 100, an imaging sensor 200, a position sensor 300, and a control circuit 600.

Specifically, the machine body 100 comprises a driving device 700. The driving device 700 is used for driving the machine body 100 to move on a working surface according to a received driving instruction. The driving device 700 usually comprises a roller and a motor for driving the roller to rotate. The roller may comprise a driving wheel and a driven wheel. The rollers may be distributed on two sides of the machine body 100, and a number of the rollers on each side may be one or two, etc.

The machine body 100 further comprises a working module. The working module is used for performing a specific working task. For example, if the autonomous moving device 10 is an automatic lawn mower, the working module comprises a mowing blade, a cutting motor, etc., and may also comprise an auxiliary component for optimizing or adjusting a mowing effect, such as a mowing height adjusting mechanism. For example, if the autonomous moving device 10 is an automatic vacuum cleaner, the working module comprises a working component for performing a vacuuming task, such as a vacuum motor, a vacuum port, a vacuum pipe, a vacuum chamber, and a dust collecting device.

The machine body 100 may also comprise an energy module. The energy module is used for providing energy for various works of the autonomous moving device 10. The energy module may comprise a rechargeable battery and a charging connection structure. The charging connection structure is usually a charging electrode piece, and the charging electrode piece may be used together with a charging electrode piece provided on a docking station to charge the autonomous moving device 10.

The machine body 100 further comprises a memory 400. The memory 400 is used for storing data generated by a sensor or a control circuit, or pre-storing data for use by the control circuit.

The machine body 100 further comprises a position sensor 500. The position sensor 500 may comprise an inertial sensor IMU or an odometer ODO installed on a driving device 700, and is used for obtaining a relative position according to a moving condition of the machine body 100.

The machine body 100 further comprises a collision detector. The collision detector is used for sensing a number of times of collision of the machine body.

In addition to the above modules, the machine body 100 may also comprise a housing for accommodating and installing various modules, a control panel for a user to operate, and may also comprise various environmental sensors, such as a humidity sensor, a temperature sensor, an acceleration sensor, a light sensor, etc. The above sensors may assist the autonomous moving device 10 in judging a working environment to execute a corresponding program.

A control circuit 600 is a core component of an autonomous moving device 10 and is used for controlling the autonomous moving device 10 to automatically move and work. Functions performed by the control circuit 600 comprise: controlling a working module to start or stop working, generating a moving path and controlling a driving device 700 to move according to the path, determining a power of an energy module and timely controlling the autonomous moving device 10 to return to a docking station for automatic docking and charging, and executing a corresponding program in combination with data of an environmental sensor.

Referring to FIG. 1 and FIG. 2, an autonomous moving device 10 comprises an imaging sensor 200. The imaging sensor 200 is connected to a machine body 100 and is used for collecting an image in a forward direction of the machine body 100. The image is at least partially an image of a working surface in the forward direction. A collected image is within a field of view 210 of the imaging sensor 200. The imaging sensor 200 may be a camera or a laser radar commonly used in the industry.

An imaging sensor 200 is installed at an upper position of a front part of a machine body 100, preferably in a central position, with a viewing angle facing forward and downward to collect an image of a working surface. A size of a field of view 210 of the imaging sensor 200 can be adjusted according to an actual requirement. A larger field of view 210 results in more images collected in a forward direction of the machine body 100, and vice versa. The machine body 100 has a plurality of forward directions, such as a normal forward, a backward, a turn, etc. In this embodiment, a forward direction of the machine body refers to a normal forward direction, that is, a direction of a central axis of the machine body.

Generally, a working area Q of an autonomous moving device 10 may comprise some special areas, for example, an irregularly shaped area, a narrow area, an area with a certain slope, an area with a limited recognition, etc. These special areas are called a target area L. The autonomous moving device 10 may adopt different recognition methods to recognize these target areas L, and may also adopt different moving and/or working methods to handle these target areas L, so as to improve an accuracy of recognition of the target area L, or a coverage rate of the target area L, or a smoothness of walking in the target area L, etc.

In order to solve a problem of how to improve an accuracy of target area recognition, or a coverage rate of a target area, or a smoothness of walking in the target area, this embodiment provides a control method for an autonomous moving device 10. The autonomous moving device 10 is configured to travel and/or work in a working area Q. Please refer to FIG. 3, the control method comprises:
S1: obtaining an image of a working area;
S2: detecting a target area in the working area based on the image, the target area being a local area in the working area, and a distance between opposite sides of the target area being less than a threshold;
S3: determining a width of the target area;
S4: controlling an angle and/or a distance between an autonomous moving device 10 and a boundary of the target area based on the width of the target area.

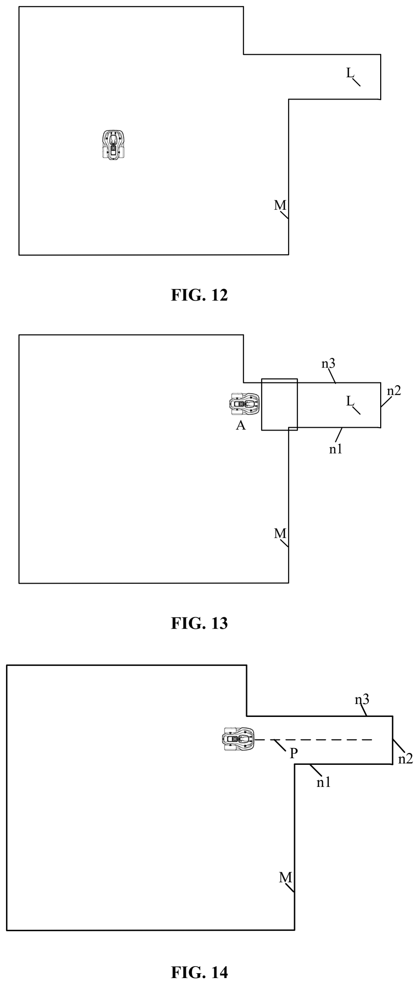

In this embodiment, an autonomous moving device 10 may be provided with an imaging sensor 200 (such as a camera). During a movement of the autonomous moving device 10, the camera may capture an image of a working area Q in real time. An image recognition processing may be performed on the image of the working area Q to determine an image recognition result, and whether a target area L is detected is determined according to the image recognition result. The target area L is a part of the working area Q, and a distance between two sides of the target area L is less than a preset threshold. The distance between the two sides of the target area L is also a width of the target area L. As shown in FIG. 12, the working area Q is an area enclosed by a boundary M, and the target area L may be a narrow area in the working area Q.

When a target area L is detected, it indicates that an autonomous moving device 10 encounters a narrow area during a movement. A width of the narrow area may be detected to determine whether the narrow area is suitable for the autonomous moving device 10 to enter. When the width of the narrow area is suitable for the autonomous moving device 10 to enter, the autonomous moving device 10 may be controlled to move and/or work in the target area L, so as to improve a working coverage rate of the narrow area and improve a moving accuracy and a smoothness. When the width of the narrow area is not suitable for the autonomous moving device 10 to enter, the autonomous moving device 10 may be controlled to ignore and move away from the target area L, so as to avoid a danger that the autonomous moving device 10 is trapped in the narrow area or moves out of a boundary.

In one embodiment, based on a width of a target area L, controlling an angle and/or a distance between an autonomous moving device 10 and a boundary G of the target area L may comprise: based on the width of the target area L, controlling whether the autonomous moving device 10 enters the target area L, which comprises:
S41: when a width of a target area L is greater than or equal to an enterable preset value, controlling an autonomous moving device 10 to enter the target area L; and when the width of the target area L is less than the enterable preset value, controlling the autonomous moving device 10 not to enter the target area L.

It should be noted that a setting of an enterable preset value is related to a width of an autonomous moving device 10. It can be said that the enterable preset value is approximately equal to the width of the autonomous moving device 10. When it is recognized that a width of a target area L is not less than the enterable preset value, it indicates that the width of the target area L is sufficient for the autonomous moving device 10 to enter for working, thereby improving a coverage rate of the autonomous moving device 10 in a working area Q. When it is recognized that the width of the target area L is less than the enterable preset value, it indicates that the width of the target area L cannot allow the autonomous moving device 10 to enter, and the autonomous moving device 10 may go out of a boundary or get stuck. At this time, the autonomous moving device 10 is made not to enter the target area L to avoid a risk of going out of the boundary or getting stuck.

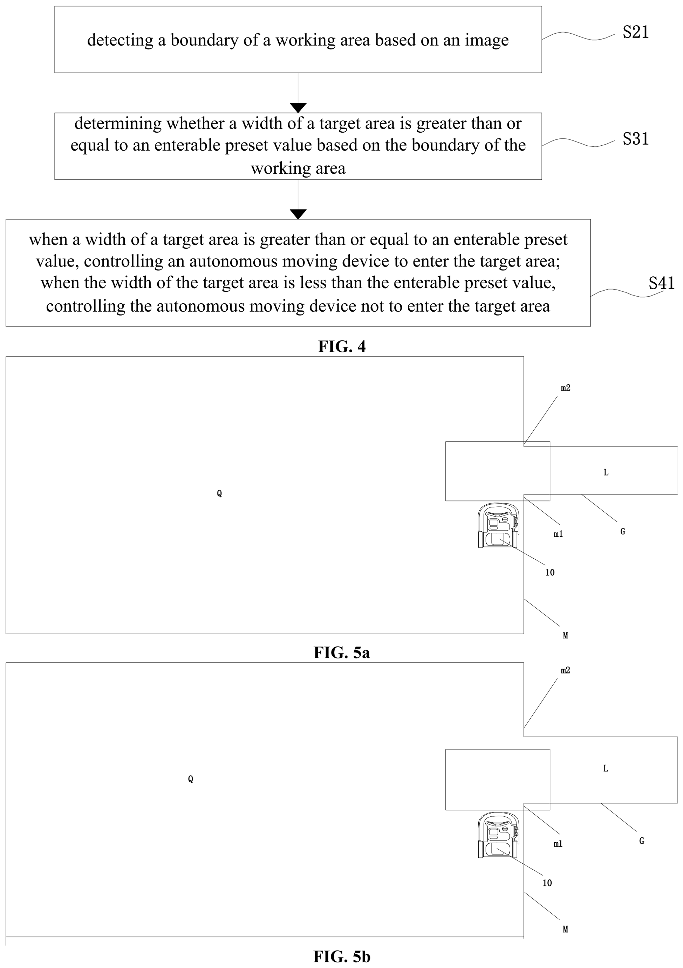

Please refer to FIG. 4, the control method further comprises:
S21: detecting a boundary M of a working area based on an image;
S31: determining whether a width of a target area L is greater than or equal to an enterable preset value based on the boundary M of the working area. It should be noted that a recognized boundary M may be a boundary on a single side of an autonomous moving device 10 in a width direction, or may be boundaries on two sides of the autonomous moving device 10 in the width direction. The width direction is a direction perpendicular to a moving direction of the autonomous moving device 10.

In one embodiment, please refer to FIG. 5a and FIG. 5b, S31: determining whether a width of a target area L is greater than or equal to an enterable preset value based on a boundary M of a working area may comprise:
recognizing that a lateral boundary M of a working area Q is discontinuous, a distance between the discontinuous lateral boundary M represents a width of a target area L, and the lateral boundary M is a boundary of the working area along which an autonomous moving device 10 moves. That is, a lateral boundary in this embodiment is a left or right lateral boundary along which the autonomous moving device 10 moves in a boundary-following mode.

An autonomous moving device 10 moves in a working area Q. During a movement, it is recognized based on an image that a lateral boundary on one side of a machine body (referring to one side in a width direction of the machine body, such as a left side or a right side) is discontinuous. Here, the lateral boundary being discontinuous means that the lateral boundary is broken. At this time, it can be determined that a target area L exists between a lateral boundary before the break and a lateral boundary after the break. For the break of the lateral boundary, two situations may occur. Situation one, please refer to FIG. 5a, it is recognized that a lateral boundary m1 before a break gradually disappears, and a lateral boundary m2 after the break gradually appears. Situation two, please refer to FIG. 5b, it is recognized that a lateral boundary (the lateral boundary m1 before the break) suddenly disappears. After the lateral boundary disappears, the autonomous moving device 10 moves for a certain distance along a current moving path, and then the lateral boundary (the lateral boundary m2 after the break) appears again. The current moving path is a moving path of the autonomous moving device 10 before the lateral boundary disappears. In these two situations, it can be determined that the target area L exists between the broken lateral boundaries. Then, a distance between the lateral boundary before the break and the lateral boundary after the break is a width of the target area L.

When a distance between the discontinuous lateral boundary is not less than an enterable preset value, an autonomous moving device 10 is controlled to enter a target area L. That is, when a distance between a lateral boundary m1 before a break and a lateral boundary m2 after the break is not less than the enterable preset value, the autonomous moving device 10 is controlled to enter the target area L. Taking a current working mode as a boundary-following mode as an example, it is recognized that a lateral boundary along which the autonomous moving device 10 is moving is discontinuous, and the distance between the lateral boundary m1 before the break and the lateral boundary m2 after the break is not less than the enterable preset value. It is determined that the autonomous moving device 10 can enter the target area L. Then, the autonomous moving device 10 is controlled to enter the target area L to continue a boundary-following work, thereby avoiding missing the target area L, improving a coverage rate of the autonomous moving device 10, and improving a moving accuracy and smoothness.

When a distance between the discontinuous lateral boundary is less than an enterable preset value, an autonomous moving device 10 is controlled to move based on a lateral boundary m2 after an interruption. That is, when a distance between a lateral boundary m1 before a break and a lateral boundary m2 after the break is less than the enterable preset value, the autonomous moving device 10 is controlled to move based on the lateral boundary m2 after the interruption. Still taking a current working mode as a boundary-following mode as an example, it is recognized that a lateral boundary along which the autonomous moving device 10 is moving is discontinuous, and the distance between the lateral boundary m1 before the break and the lateral boundary m2 after the break is less than the enterable preset value. It is determined that the autonomous moving device 10 cannot enter a target area L to continue a boundary-following work. The autonomous moving device 10 is controlled to continue the boundary-following work along the lateral boundary m2 after the break, so as to avoid a currently inaccessible target area L, prevent the autonomous moving device 10 from being trapped in a narrow area or going out of a boundary to cause a danger, and at the same time improve a traveling smoothness of the autonomous moving device 10.

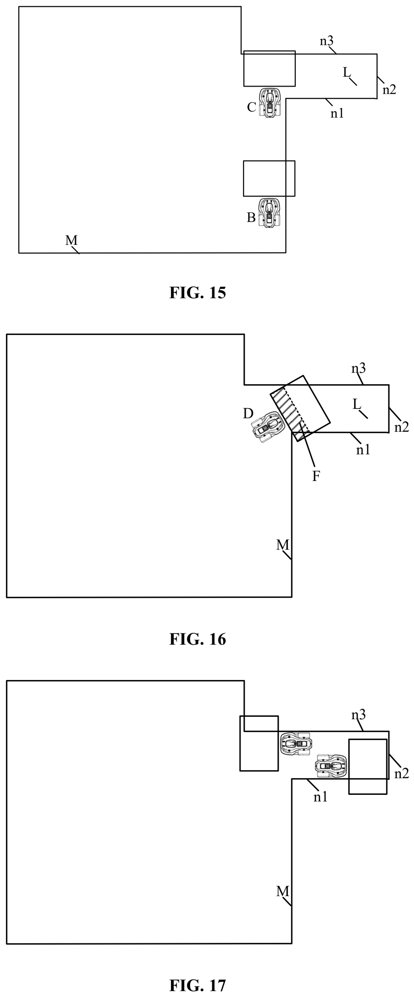

Please refer to FIG. 15, in another case, after an autonomous moving device 10 recognizes that a lateral boundary disappears, and after moving a certain distance along a current moving path, a front boundary appears. The front boundary is a boundary of a target area L located in front of the autonomous moving device 10. At this time, it can also be determined that the target area L appears at a side of the autonomous moving device 10. A width of the target area L can be determined according to the lateral boundary before disappearance and the front boundary. The width of the target area L is a distance between the lateral boundary before disappearance and the front boundary.

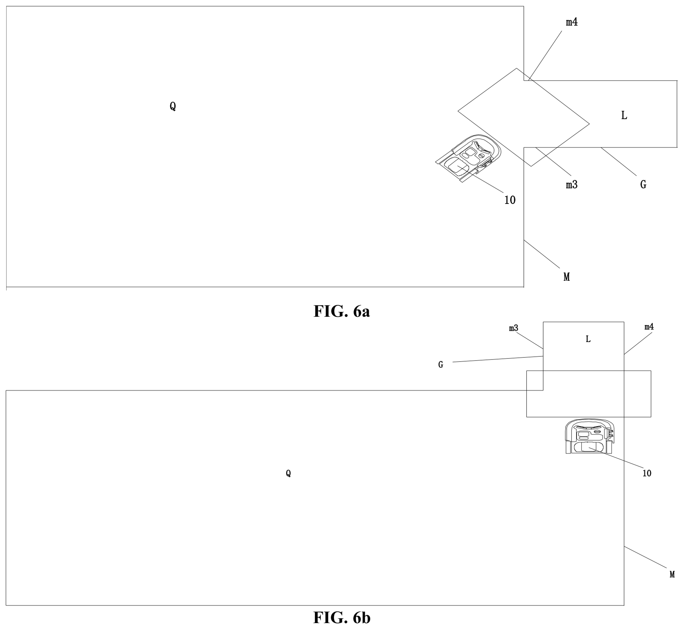

In another embodiment, please refer to FIG. 6a and FIG. 6b, S31: determining whether a width of a target area L is greater than or equal to an enterable preset value based on a boundary M of a working area may comprise:
recognizing opposite two lateral boundaries in a working area Q, a distance between the two lateral boundaries represents a width of a target area L, and the opposite lateral boundaries are boundaries of the working area located on two sides in a width direction of an autonomous moving device 10.

Detecting a boundary of a working area based on an image; identifying a width of a target area L based on a distance between opposite lateral boundaries, where the lateral boundaries are boundaries of the working area located at a side of an autonomous moving device 10. It should be noted that the opposite lateral boundaries refer to lateral boundaries located on two sides in a width direction of the autonomous moving device 10, and may also be said to be lateral boundaries located on a left side and a right side of the autonomous moving device 10. The distance between the opposite two lateral boundaries represents the width of the target area L. Please refer to FIG. 6a, taking a current working mode as an internal cutting mode as an example, an autonomous moving device 10 recognizes opposite two lateral boundaries m3 and m4, and a distance between the opposite two lateral boundaries m3 and m4 is less than an enterable preset value, it is determined that the autonomous moving device 10 cannot enter a target area L to continue an internal cutting work, and the autonomous moving device 10 is controlled to move away from the target area L. The autonomous moving device 10 leaving the target area L may be turning away, backing away or turning around to leave. The autonomous moving device 10 recognizes the opposite two lateral boundaries m3 and m4, and the distance between the opposite two lateral boundaries m3 and m4 is not less than the enterable preset value, it is determined that the autonomous moving device 10 can enter the target area L, and the autonomous moving device 10 is controlled to enter the target area L to perform the internal cutting work. It should be noted that, in this embodiment, recognizing the distance between the opposite lateral boundaries to identify the width of the target area L is not limited by a working mode of the autonomous moving device 10, and can also be applied in a boundary-following mode. Please refer to FIG. 6b, the autonomous moving device 10 recognizes the opposite two lateral boundaries m3 and m4, and the distance between the opposite two lateral boundaries m3 and m4 is less than the enterable preset value, it is determined that the autonomous moving device 10 cannot enter the target area L to continue a boundary-following work, and the autonomous moving device 10 is controlled to move away from the target area L. The autonomous moving device 10 leaving the target area L may be turning away, backing away or turning around to leave a narrow area. The autonomous moving device 10 recognizes the opposite two lateral boundaries m3 and m4, and the distance between the opposite two lateral boundaries m3 and m4 is not less than the enterable preset value, it is determined that the autonomous moving device 10 can enter the target area L, and the autonomous moving device 10 is controlled to enter the target area L to perform the boundary-following work.

In another case, an autonomous moving device 10 recognizes opposite two lateral boundaries m3, m4, and a distance between the opposite two lateral boundaries m3, m4 is not less than an enterable preset value, and also detects that a front boundary appears within a certain distance (the distance can be freely set, for example, to 0.25 m, 0.3 m, 0.4 m, etc.) in front of the autonomous moving device, the autonomous moving device is controlled not to enter a target area L. In this scenario, although a width of a narrow area allows the autonomous moving device 10 to enter the target area L, the target area is a dead end with a shorter length, and it is difficult for the autonomous moving device to get out of the dead end. Therefore, the autonomous moving device 10 is controlled not to enter the target area L to perform a work.

After an autonomous moving device 10 recognizes that a lateral boundary disappears, and after moving a certain distance along a current moving path, a front boundary appears. The front boundary is a boundary of a target area L located in front of the autonomous moving device 10. At this time, it can also be determined that the target area L appears at a side of the autonomous moving device 10. A width of the target area L can be determined according to the lateral boundary before disappearance and the front boundary. The width of the target area L is a distance between the lateral boundary before disappearance and the front boundary.

Under different working modes, different control strategies may be used to control a movement and/or a work of an autonomous moving device 10 based on a width of a target area L, so as to improve a flexibility of a grass mowing of the autonomous moving device 10.

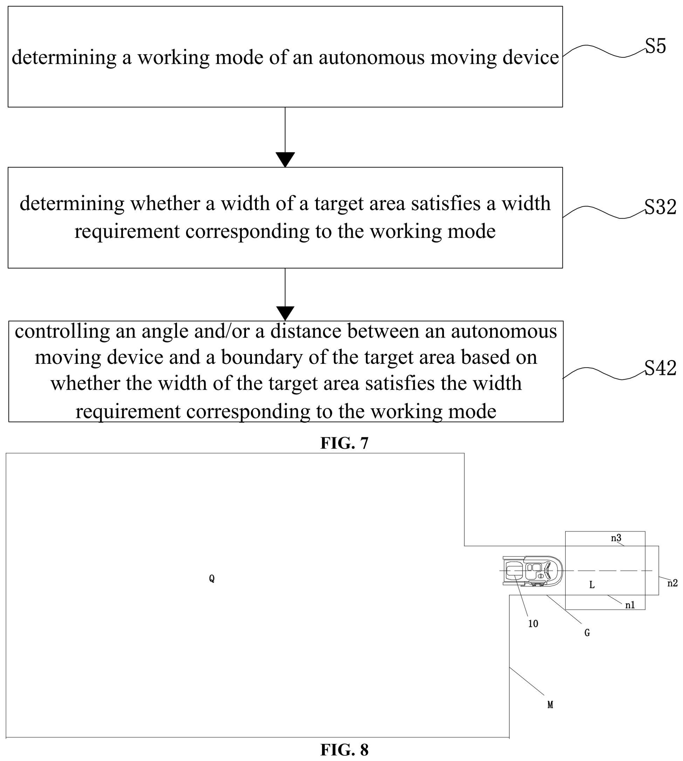

In one embodiment, referring to FIG. 7, the control method further comprises:
S5: determining a working mode of an autonomous moving device;
S32: determining whether a width of a target area L satisfies a width requirement corresponding to the working mode;
S42: controlling an angle and/or a distance between an autonomous moving device and a boundary G of the target area L based on whether the width of the target area L satisfies the width requirement corresponding to the working mode.

Under different working modes, selecting a moving and/or working manner suitable for an autonomous moving device 10 based on a width of a target area L (a narrow area) can enable the autonomous moving device 10 to have a higher coverage rate in the narrow area and a higher smoothness of traveling in the narrow area. The target area L has opposite two boundaries. The opposite two boundaries may not be parallel, or may be parallel, and may be a straight line shape or a curved line shape. A width of the target area L refers to a width between the opposite two boundaries. The autonomous moving device 10 may determine the width of the target area L according to a collected image of a working area Q. How the autonomous moving device 10 determines the width of the target area L will be described in detail below, and details are not described herein again.

For example, a type of a working mode may comprise an internal cutting mode and a boundary-following mode. The internal cutting mode refers to performing a cutting inside a working area Q, and the boundary-following mode refers to moving and/or cutting along a boundary M of the working area Q. The internal cutting mode may be a random cutting mode or a planned cutting mode, and the boundary-following mode may be a boundary-following cutting mode or a boundary-following returning mode. The random cutting mode refers to performing the cutting on an inside of the working area Q based on a random moving path. The planned cutting mode refers to performing the cutting on the inside of the working area Q based on a planned moving path. The boundary-following cutting mode refers to moving and cutting along the boundary M of the working area Q. The boundary-following returning mode refers to moving along the boundary M of the working area Q to a charging station.

In one embodiment, please refer to FIG. 17, S42: controlling an angle and/or a distance between an autonomous moving device and a boundary G of a target area L based on whether a width of the target area L satisfies a width requirement corresponding to a working mode comprises:
when an autonomous moving device 10 is in a boundary-following mode, and when a width of a target area L is not less than a first preset value, controlling the autonomous moving device 10 to move along the boundary G of the target area L according to a first moving path, a distance between the first moving path and the boundary G of the target area L being less than or equal to a first distance.

If a width of a target area L is less than a threshold, it indicates that the target area L is a narrow area; at the same time, if the width of the target area L is not less than a first preset value, and the first preset value is less than the threshold, it indicates that the target area L is a larger narrow area.

For example, a threshold is 1 meter, and a first preset value is 0.7 meter. The threshold and the first preset value may be adjusted according to a user requirement.

When a width is not less than a first preset value and is less than a threshold, a target area L is a slightly larger narrow area. Controlling an autonomous moving device 10 to move along a boundary with a boundary-following distance not greater than a first distance can ensure an accurate following of a boundary M and a cutting to a boundary during a boundary-following cutting, so as to improve a cutting coverage rate. It should be noted that the first distance is a distance from a certain part on the autonomous moving device 10 (such as a side of a machine body close to a boundary of the target area, or a roller close to the boundary of the target area, or a side of a mowing blade close to the boundary of the target area) to a boundary G of the target area L. A machine body of the autonomous moving device 10 may exceed the boundary G of the target area L or may not exceed the boundary G of the target area L (such as straddling the boundary G of the target area L). For example, the autonomous moving device 10 may continue a boundary-following moving path before entering the target area L, and continue to move along the boundary G of the target area L.

Please continue to refer to FIG. 17. When an autonomous moving device 10 is in a boundary-following mode, the autonomous moving device 10 may move inside a boundary G of a target area L, and adjust a moving direction according to a position change of the boundary G of the target area L, so as to accurately follow a boundary M and move along the boundary M. Taking the autonomous moving device 10 moving along the boundary M in a counterclockwise direction as an example, as shown in the figure, the autonomous moving device 10 may be located on a left side of the boundary M, that is, the boundary M is located on a right side of the autonomous moving device 10. A position of the boundary M on the right side of the autonomous moving device 10 may be determined based on an image of a working area. The boundary G of the target area L comprises a boundary n1, a boundary n2, and a boundary n3. When it is recognized that a width of the target area L is not less than a first preset value, the autonomous moving device 10 is controlled to move along the boundary n1, the boundary n2, and the boundary n3 of the target area L according to a first moving path. That is, the autonomous moving device 10 is controlled to move along the boundary n1, the boundary n2, and the boundary n3 of the target area L by not more than a first distance. During a moving process, a work may be performed, so as to cut a grass at the boundary n1, the boundary n2, and the boundary n3 of the target area L, improve a cutting coverage rate, ensure a clean cutting, and improve a user satisfaction.

When moving along a boundary in a clockwise direction, an autonomous moving device 10 may be located on a right side of the boundary, that is, the boundary is located on a left side of the autonomous moving device 10. Based on an image of a working area, it may be determined that the boundary is located on the right side of the autonomous moving device 10. When it is recognized that a width of a target area L is not less than a first preset value, the autonomous moving device 10 is controlled to move along a boundary n3, a boundary n2, and a boundary n1 of the target area L according to a first moving path, that is, the autonomous moving device 10 is controlled to move along the boundary n3, the boundary n2, and the boundary n1 of the target area L by not more than a first distance.

In one embodiment, please refer to FIG. 8, S42: controlling an angle and/or a distance between an autonomous moving device and a boundary G of a target area L based on whether a width of the target area L satisfies a width requirement corresponding to a working mode comprises:
when an autonomous moving device 10 is in a boundary-following mode, and when a width of a target area L is less than a first preset value and greater than or equal to a second preset value, controlling the autonomous moving device 10 to move along a middle of opposite two lateral boundaries of the target area L.

If a width of a target area L is less than a first preset value and greater than or equal to a second preset value, the target area L is a narrower area, but an autonomous moving device 10 can still pass through the narrow area. It should be noted that a second preset value is related to a width of a machine body of the autonomous moving device 10, and the second preset value may be set to be slightly greater than or equal to the width of the machine body.

For example, a first preset value is 0.7 meter, and a second preset value is 0.5 meter. A threshold, the first preset value, and the second preset value may be adjusted according to a user requirement.

When a width is less than a first preset value and greater than or equal to a second preset value, a target area L is a smaller narrow area that an autonomous moving device 10 can still pass through. Controlling the autonomous moving device 10 to move along a middle of opposite two lateral boundaries of the narrow area can prevent the autonomous moving device 10 from moving out of a boundary and causing a danger.

Please continue to refer to FIG. 8, an autonomous moving device 10 is in a boundary-following mode, a boundary of a target area L comprises a boundary n1, a boundary n2 and a boundary n3. When it is recognized that a width of the target area L is less than a first preset value and greater than or equal to a second preset value, the autonomous moving device 10 is controlled to move in a middle of the boundary n1 and a boundary n3 of the target area L, so as to avoid a danger caused by a machine moving beyond the boundary. Further, when the autonomous moving device 10 moves until the boundary n2 is recognized, the autonomous moving device 10 is controlled to move backward to leave or turn around to leave the narrow area.

In one example, an autonomous moving device may not strictly move along a boundary of a target area, but move along a general trend of the boundary. For example, if the boundary of the target area is a curve with a variable shape, the autonomous moving device does not need to strictly move along the variable curve, but moves along a general line of the curve. For example, a path substantially parallel to each turning point of the curve boundary may be generated, and the autonomous moving device is controlled to move along the path. In this way, a smoothness of a movement of the autonomous moving device can be improved.

In one embodiment, S42: controlling an angle and/or a distance between an autonomous moving device and a boundary G of a target area L based on whether a width of the target area L satisfies a width requirement corresponding to a working mode comprises:
when a width of a target area L is less than a second preset value, controlling an autonomous moving device 10 to leave the target area L.

When a width is less than a second preset value, a target area L is a very narrow area, and an autonomous moving device 10 cannot pass through the area. At this time, the autonomous moving device 10 is controlled to leave the narrow area to avoid a danger caused by the autonomous moving device 10 exceeding a boundary G. It should be noted that the autonomous moving device 10 leaving the narrow area may be moving backward or turning around to leave the narrow area. It can be foreseen that this scenario may occur when the autonomous moving device 10 is moving in the target area L, and it is recognized that a width of the target area L becomes narrower, so as to be less than the second preset value, and the autonomous moving device 10 cannot continue to move forward, and thus the autonomous moving device 10 is controlled to leave a current target area L.

In a boundary-following cutting mode, controlling a distance between an autonomous moving device 10 and a boundary G of a target area L based on a width of the target area L can control the autonomous moving device 10 to move and cut along the boundary G of the target area L, so as to improve a cutting coverage rate and avoid going out of a boundary. In a boundary-following returning mode, controlling the distance between the autonomous moving device 10 and the boundary G of the target area L based on the width of the target area L can control the autonomous moving device 10 to move along the boundary G of the target area L, so as to accurately follow the boundary G and move to a charging station.

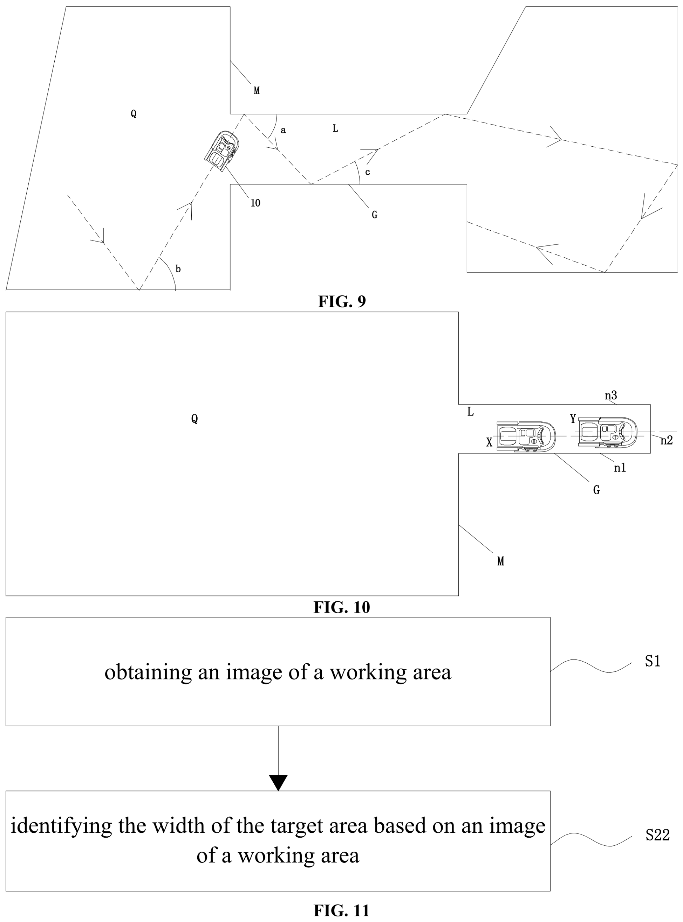

In one embodiment, please refer to FIG. 9, S42: controlling an angle and/or a distance between an autonomous moving device and a boundary G of a target area L based on whether a width of the target area L satisfies a width requirement corresponding to a working mode comprises:
when an autonomous moving device is in an internal cutting mode, and when a width of a target area L is not less than a third preset value, controlling the autonomous moving device to move within the target area L according to a random moving path or a planned moving path.

If a width of a target area L is less than a threshold, it indicates that the target area L is a narrow area; at the same time, if the width of the target area L is not less than a third preset value, and the third preset value is less than the threshold, it indicates that the target area L is a larger narrow area. It should be noted that a threshold when an autonomous moving device 10 is in a boundary-following mode and a threshold when the autonomous moving device 10 is in an internal cutting mode may be a same value or different values.

For example, a threshold is 1.1 meters, and a third preset value is 0.8 meter. The threshold and the third preset value may be adjusted according to a user requirement.

When a width of a target area L is not less than a third preset value and is less than a threshold, the target area L is a larger narrow area. An autonomous moving device 10 is controlled to move in the target area L according to a random moving path or a planned moving path, so that a grass inside the target area L is cut cleanly without going out of a boundary.

Further, please continue to refer to FIG. 9, S42: controlling an angle and/or a distance between an autonomous moving device 10 and a boundary of a target area L based on whether a width of the target area L satisfies a width requirement corresponding to a working mode comprises:
when a working mode is an internal cutting mode, and when a width of a target area L is not less than a third preset value, controlling an autonomous moving device 10 to turn at an angle a within a first angle range when approaching or reaching a boundary of the target area L, an upper limit value of the first angle range being less than an upper limit value of a second angle range, the second angle range being an angle range selected for the autonomous moving device 10 to turn when approaching or reaching a boundary of a non-target area L.

An autonomous moving device 10 is in an internal cutting mode. When moving and/or working in a larger narrow area, the autonomous moving device 10 moves according to a random moving path or a planned moving path. When approaching or reaching a boundary between a grass and a non-grass, the autonomous moving device 10 is controlled to turn by an angle a to move away from the boundary. The angle a is selected from the first angle range. Before the autonomous moving device 10 enters a target area L, the autonomous moving device 10 also moves in a non-target area L according to the random moving path or the planned moving path. When approaching or reaching the boundary between the grass and the non-grass, the autonomous moving device 10 is controlled to turn by an angle b to move away from the boundary. The angle b is selected from a second angle range. An upper limit value of the first angle range is greater than an upper limit value of the second angle range. Thus, the autonomous moving device 10 can make fewer turns in a narrow channel, so as to leave the narrow area more quickly. It should be noted that the angle a and an angle b are an included angle between a central axis of the autonomous moving device 10 and a boundary not passed by the autonomous moving device 10. For example, the central axis of the autonomous moving device 10 divides the boundary into a left part and a right part. The autonomous moving device 10 comes from a position close to a left half boundary and leaves from a position close to a right half boundary. Then, a part of the boundary not passed by the autonomous moving device 10 is the right half boundary.

For example, a first angle range comprises 30 degrees to 50 degrees. Thus, an angle a may be 30 degrees, 35 degrees, 40 degrees, 45 degrees, or 50 degrees.

For example, a second angle range comprises 30 degrees to 120 degrees. Thus, an angle b may be 30 degrees, 40 degrees, 50 degrees, 60 degrees, 70 degrees, 80 degrees, 90 degrees, 100 degrees, 110 degrees, or 120 degrees.

Further, please continue to refer to FIG. 9, controlling an angle and/or a distance between an autonomous moving device 10 and a boundary G of a target area L based on whether a width of the target area L satisfies a width requirement corresponding to a working mode comprises:
when a width of a target area L is not less than a third preset value, controlling an autonomous moving device 10 to move in the target area L according to a random moving path;
detecting a first positional relationship between the autonomous moving device 10 and a boundary G of the target area L according to an image;
determining whether the autonomous moving device 10 satisfies a predetermined boundary-approaching condition according to the first positional relationship, and if a determination result is yes, controlling the autonomous moving device 10 to turn at an angle in a first angle range to move away from a boundary of a working area;
detecting a second positional relationship between the autonomous moving device 10 after moving away from the boundary G of the target area L and the boundary G of the target area L according to the image; and
determining whether the autonomous moving device 10 satisfies the predetermined boundary-approaching condition according to the second positional relationship, and if a determination result is yes, controlling the autonomous moving device 10 to turn at an angle in a third angle range to move away from the boundary G of the target area L, wherein an upper limit value of the third angle range is less than an upper limit value of the first angle range.

When a width of a narrow channel is greater than a first preset value, a width of a target area L is suitable for an autonomous moving device 10 to move in the narrow channel according to a random moving path or a planned moving path. Further, after the autonomous moving device 10 detects a first positional relationship with a boundary according to an image, the autonomous moving device 10 determines that the autonomous moving device 10 has approached or reached the boundary according to the first positional relationship, so as to control the autonomous moving device 10 to turn at an angle a in a first angle range and move away from the boundary. After the autonomous moving device 10 moves away from a previous boundary, the autonomous moving device 10 continues to detect a second positional relationship with the boundary according to the image. According to the second positional relationship, it is determined that the autonomous moving device 10 approaches or reaches the boundary again. At this time, the autonomous moving device 10 is controlled to turn at an angle c in a third angle range, wherein an upper limit value of the third angle range is less than an upper limit value of the first angle range. After the autonomous moving device 10 turns for a first time when reaching the boundary, the autonomous moving device 10 turns again at an angle in an angle range with a smaller upper limit value, which is beneficial for the autonomous moving device 10 to move out of a current environment more quickly, and improves a completion efficiency of a working task in a working area without a boundary line. It should be noted that the angle a is an included angle between a central axis of the autonomous moving device 10 and a boundary not passed by the autonomous moving device 10, and an angle c is also an included angle between the central axis of the autonomous moving device 10 and a boundary not passed by the autonomous moving device 10. For example, the central axis of the autonomous moving device 10 divides the boundary into a left part and a right part. The autonomous moving device 10 comes from a position close to a left half boundary and leaves from a position close to a right half boundary. Then, a part of the boundary not passed by the autonomous moving device 10 is the right half boundary.

For example, a first angle range comprises 30 degrees to 50 degrees. Thus, an angle a may be 30 degrees, 35 degrees, 40 degrees, 45 degrees, or 50 degrees.

For example, a third angle range comprises 30 degrees to 40 degrees. Thus, an angle c may be 30 degrees, 33 degrees, 36 degrees, or 40 degrees.

In one embodiment, please refer to FIG. 10, S42: controlling an angle and/or a distance between an autonomous moving device 10 and a boundary G of a target area L based on whether a width of the target area L satisfies a width requirement corresponding to a working mode comprises:
when a width of a target area L is less than a third preset value and greater than or equal to a fourth preset value, determining a boundary-following distance;
determining a boundary-approaching path according to the boundary-following distance, the boundary-following distance representing a distance between the boundary-approaching path and a boundary G of the target area L; and
controlling an autonomous moving device 10 to move and/or work according to the boundary-approaching path.

If a width of a target area L is less than a third preset value and greater than or equal to a fourth preset value, the target area L is a narrower area. An autonomous moving device 10 can still pass through the narrow area, but it is not suitable to move in a narrow channel according to a random moving path or a planned moving path, and there is a risk that the autonomous moving device 10 collides with a boundary or goes out of a boundary. It should be noted that a fourth preset value is related to a width of a machine body of the autonomous moving device 10, and the fourth preset value may be set to be slightly greater than or equal to the width of the machine body. It should also be noted that a third preset value and a fourth preset value in this embodiment may be same numerical values as a first preset value and a second preset value in the above-mentioned boundary-following mode, or may be different numerical values. A naming of the first preset value, the second preset value, the third preset value and the fourth preset value in two working modes only reflects a numerical value range in a different working mode, and there is no necessary connection.

For example, a threshold is 1.1 meters, a third preset value is 0.8 meter, and a fourth preset value is 0.5 meter. The threshold, the third preset value and the fourth preset value may be adjusted according to a user requirement.

When a width is less than a third preset value and greater than or equal to a fourth preset value, a target area L is a smaller narrow area that an autonomous moving device 10 can still pass through, but it is not suitable to perform a work in the narrow area with a random moving path or a planned moving path, and the autonomous moving device may go out of a boundary. A boundary-following distance is determined, and a distance between the autonomous moving device 10 and a boundary G of the target area L is controlled by the boundary-following distance, so that the autonomous moving device 10 moves along the boundary, so as to avoid a danger caused by the autonomous moving device 10 going out of the boundary.

In one example, a boundary-following distance is variably selected within a certain width range. A boundary-following distance is selected within a certain width range, and a selection of the boundary-following distance is variable. When passing through a smaller narrow path in an internal cutting mode, an autonomous moving device 10 may select any boundary-approaching distance within a certain width range, and control the autonomous moving device 10 to move along a boundary with the boundary-approaching distance. With this setting, it is possible to avoid a situation where the autonomous moving device 10 moves along a same path every time in a target area L, and avoid a lawn wheel mark caused by a repeated and multiple rolling on the same path, thereby improving a lawn aesthetics and a user experience.

Please continue to refer to FIG. 10. An autonomous moving device 10 is in an internal cutting mode and may move inside a boundary G of a target area L. When it is recognized that a width of the target area L is less than a third preset value and greater than or equal to a fourth preset value, the autonomous moving device 10 moves along a boundary-approaching path, that is, moves with a boundary-following distance along the boundary G of the target area L, and adjusts a moving direction with a change of the boundary, so as to avoid a danger caused by the autonomous moving device 10 moving out of a boundary. When repeatedly cutting the narrow area, different boundary-following distances may be selected to follow the boundary and move along the boundary, so as to avoid a lawn wheel mark caused by a repeated and multiple rolling on a same path. The autonomous moving device 10 may move along a left boundary or a right boundary, which is not limited in this embodiment. Hereinafter, a case where the autonomous moving device 10 moves along a right boundary n1 is taken as an example. As shown in positions X and Y in the figure, the autonomous moving device 10 may be located on a left side of the boundary, that is, the boundary is located on a right side of the autonomous moving device 10. A boundary of the target area L comprises a boundary n1, a boundary n2 and a boundary n3. When it is recognized that the width of the target area L is less than the third preset value and greater than or equal to a fourth preset value, the autonomous moving device 10 is controlled to move along the boundary n1 of the target area L according to a boundary-approaching path, that is, the autonomous moving device 10 is controlled to move along the boundary n1 of the target area L with a boundary-following distance. During a moving process, a work may be performed to cut a grass in the target area L. When cutting the narrow area again, the autonomous moving device 10 may be controlled to move along the boundary n1 of the target area L according to another boundary-approaching path, that is, the autonomous moving device 10 is controlled to move along the boundary n1 of the target area L with another boundary-following distance. During the moving process, the work is performed to cut the grass in the target area L. Thus, a lawn wheel mark caused by a repeated and multiple rolling on a same path is avoided, and a cutting coverage rate is improved, a clean cutting is ensured, and a user satisfaction is improved.

When an autonomous moving device 10 moves along a left boundary, the autonomous moving device 10 may be located on a right side of the boundary, that is, the boundary is located on a left side of the autonomous moving device 10. When it is recognized that a width of a target area L is less than a third preset value and greater than or equal to a fourth preset value, the autonomous moving device 10 is controlled to move along a boundary n3 of the target area L according to a boundary-approaching path, that is, the autonomous moving device 10 is controlled to move along the boundary n3 of the target area L with a boundary-following distance, and perform a work during a moving process, so as to cut a grass in the target area L. When cutting the narrow area again, the autonomous moving device 10 may be controlled to move along the boundary n3 of the target area L according to another boundary-approaching path, that is, the autonomous moving device 10 is controlled to move along the boundary n3 of the target area L with another boundary-following distance, and perform the work during the moving process, so as to cut the grass in the target area L.

In one embodiment, S42: controlling an angle and/or a distance between an autonomous moving device and a boundary of a target area L based on whether a width of the target area L satisfies a width requirement corresponding to a working mode comprises:
when a width of a target area L is less than a fourth preset value, controlling an autonomous moving device to leave the target area L.

When an autonomous moving device 10 is in an internal cutting mode, and when a width of a target area L is less than a second preset value, the autonomous moving device 10 is controlled to leave the target area L. When the width of the target area L is less than the second preset value, the target area L is a very narrow area, and the autonomous moving device 10 cannot pass through the area. At this time, the autonomous moving device 10 is controlled to leave the narrow area to avoid a danger caused by the autonomous moving device 10 exceeding a boundary. It should be noted that the autonomous moving device 10 leaving the narrow area may be moving backward or turning around to leave the narrow area. It can be foreseen that this scenario may occur when the autonomous moving device 10 is moving in the target area L, and it is recognized that a width of the target area L becomes narrower, so as to be less than a fourth preset value, and the autonomous moving device 10 cannot continue to move forward, and thus the autonomous moving device 10 is controlled to leave a current target area L.

In one embodiment, please refer to FIG. 11, a control method of an autonomous moving device 10 further comprises: determining a width of a target area L; and the determining the width of the target area L comprises: S22: identifying the width of the target area L based on an image of a working area.

Specifically, identifying a width of a target area L based on an image of a working area may comprise: detecting a boundary of the working area based on the image; and identifying the width of the target area L based on a distance between opposite lateral boundaries, where the lateral boundaries are boundaries of the working area located at a side of an autonomous moving device 10. It should be noted that the opposite lateral boundaries refer to boundaries located on two sides in a width direction of the autonomous moving device 10, and may also be said to be boundaries located on a left side and a right side of the autonomous moving device 10. The distance between the opposite two lateral boundaries represents the width of the target area L.

It can be understood that when a single image can recognize opposite two lateral boundaries, a width of a target area L can be identified based on the single image. When a single image cannot recognize the opposite two lateral boundaries, a map of a working area Q may be generated according to images, and the opposite two lateral boundaries are recognized based on the map of the working area Q, and then the width of the target area L is identified. According to a plurality of images of the working area when the target area L is detected and/or an image of the working area after the target area L is detected (for example, a plurality of images captured during a turning process), a map is generated. The map may be called a local map, representing a map of the target area L. The local map may reflect various information (a position, a shape, an angle, a width, etc.) of the target area L in detail, sufficiently and completely, and then the width of the target area L is identified according to the local map. Of course, a global map of the working area Q may also be generated according to a plurality of detected images of the working area. The global map represents the entire working area Q. Similarly, the global map may reflect various information (the position, the shape, the angle, the width, etc.) of the working area Q (including the target area L) in detail, sufficiently and completely, and then the width of the target area L is identified according to the global map.

In another embodiment, determining a width of a target area L comprises: detecting a number of turns of an autonomous moving device 10 in the target area L within a certain period of time, and comparing the number of turns with a preset number threshold to identify the width of the target area L. When the autonomous moving device 10 moves in the target area L according to a random moving path or a planned moving path, the autonomous moving device 10 turns when recognizing that the autonomous moving device 10 approaches or reaches a boundary G of the target area L. If a number of turns within a certain period of time (for example, 5 seconds, 8 seconds, 10 seconds, etc.) exceeds a preset number threshold (which may be set to 3 times, 4 times, 5 times), it is determined that the width of the target area L is a smaller narrow area, which may no longer be suitable for moving with the random moving path or the planned moving path. A moving manner of the autonomous moving device 10 is changed, for example, to moving along the boundary G of the target area L with a boundary-following distance. If the number of turns within the certain period of time does not exceed the preset number threshold, it is determined that the width of the target area L is a larger narrow area, which is suitable for moving with the random moving path or the planned moving path. The autonomous moving device 10 may keep moving in the target area L with the random moving path or the planned moving path.

In addition, an embodiment is further provided, which is an autonomous moving device 10. The autonomous moving device 10 is configured to travel and/or work in a working area Q. The autonomous moving device 10 comprises:
an imaging sensor 200, configured to capture an image of a working area Q;
a controller 600, configured to obtain an image of the working area, and detect a target area L in the working area Q based on the image, the target area L being a local area in the working area Q, and a distance between opposite sides of the target area L being less than a threshold; and
the controller 600 is further configured to determine a width of the target area L, and control an angle and/or a distance between an autonomous moving device 10 and the target area L based on the width of the target area L.

In addition, an embodiment is further provided, which is a computer-readable storage medium. The storage medium stores a computer program, and the computer program is used for performing the method.

To solve a technical problem of how to improve a cutting coverage, this embodiment provides a control method, which is applied to an autonomous moving device. The autonomous moving device is configured to travel and/or work in a working area. The autonomous moving device is provided with a camera and/or a collision detector for sensing a collision. The camera may be located on a front side of a machine body. The camera may capture an image of the working area. The control method comprises:
determining a working mode of the autonomous moving device;
obtaining an image of a working area captured by the camera;
detecting a target area and determining a detection result based on the image of the working area or by sensing a number of collisions of the autonomous moving device in the working area within a certain period of time, the target area being a local area in the working area, and a distance between two sides of the target area being less than a threshold; and
when the detection result is that the target area is detected, controlling a moving path of the autonomous moving device in the target area according to the working mode.

In this embodiment, a type of a working mode may comprise an internal cutting mode and a boundary-following mode. The internal cutting mode refers to performing a cutting inside a working area, and the boundary-following mode refers to moving and/or cutting along a boundary of the working area. The internal cutting mode may be a random cutting mode or a planned cutting mode, and the boundary-following mode may be a boundary-following cutting mode or a boundary-following returning mode. The random cutting mode refers to performing the cutting on an inside of the working area based on a random moving path. The planned cutting mode refers to performing the cutting on the inside of the working area based on a planned moving path. The boundary-following cutting mode refers to moving and cutting along the boundary of the working area. The boundary-following returning mode refers to moving along the boundary of the working area to a charging station.

During a movement of an autonomous moving device, a camera may capture an image of a working area in real time. An image recognition processing may be performed on the image of the working area to determine an image recognition result, and whether a target area is detected is determined according to the image recognition result. The target area is a part of the working area, and a distance between two sides of the target area is less than a preset threshold. The distance between the two sides of the target area is also a width of the target area. During the movement of the autonomous moving device, a collision detector may sense a collision between the autonomous moving device and an obstacle area in real time, and record a number of collisions occurred within a certain period of time. A sensing result determines whether the target area is detected. The target area is a part of the working area, and a number of collisions of the collision detector in the target area within a certain period of time is greater than a collision number threshold. As shown in FIG. 12, the working area is an area enclosed by a boundary M, and a target area L may be a narrow area in the working area.

When a target area is detected, it indicates that an autonomous moving device encounters a narrow area during a movement. The autonomous moving device may be controlled to move and/or work in the target area, so as to improve a work coverage rate of the target area and improve a movement accuracy. Under different working modes, different control strategies may be used to control a movement and/or a work of the autonomous moving device. A moving and/or working state of the autonomous moving device comprises a turning state. In the turning state, at least one roller is always in a motion state. For example, in an internal cutting mode, the autonomous moving device may be controlled to move and cut inside the target area, so as to improve a cutting coverage rate. In a boundary-following cutting mode, the autonomous moving device may be controlled to move and cut along a boundary of the target area, so as to improve the cutting coverage rate. In a boundary-following returning mode, the autonomous moving device may be controlled to move along the boundary of the target area, so as to accurately follow the boundary and move to a charging station.

In one embodiment, detecting a target area and determining a detection result based on an image of a working area comprises:
performing an image recognition processing on the image of the working area to determine an image recognition result; and
determining the detection result based on a working mode and the image recognition result.

In this embodiment, under different working modes, a condition for determining whether a target area is detected may be different. The condition may be matched with a working mode to improve an accuracy of a detection result.

Under a same working mode, a position of a target area is different, and a condition for determining the target area may also be different. Under the same working mode, a position of the target area relative to an autonomous moving device is different, and a condition for determining the target area is also different. For example, in a boundary-following mode, when the target area is located in front of the autonomous moving device and when the target area is located at a side of the autonomous moving device, the condition for determining a front target area and a side target area may be different, that is, a distance threshold of the front target area and the side target area may be different.

When a target area is irregular, as an autonomous moving device moves and/or works in the target area, a condition for determining the target area may also be different. The target area being irregular means that a distance between two lateral boundaries of the target area is variable. As the autonomous moving device moves and/or works in the target area, a detected distance between the two lateral boundaries changes accordingly. At this time, the condition for determining the target area will also change according to an actual situation. For example, when the autonomous moving device enters the target area, the condition for determining the target area is that a width is 60 cm. As the autonomous moving device moves and/or works, the target area becomes narrower, and the autonomous moving device continues to travel and adjusts the condition for determining the target area to be a distance of 50 cm.

In one embodiment, detecting a target area and determining a detection result based on a sensed number of collisions of an autonomous moving device in a working area within a certain period of time comprises:
recording a number of collisions of the autonomous moving device to determine a number of collisions in the working area within a certain period of time; and
determining the detection result based on a comparison between a number of collisions of the autonomous moving device recorded in the working area within a certain period of time and a number threshold.

In this embodiment, under different working modes, a number threshold is an adjustable value, wherein a certain period of time may be a period of time when an autonomous moving device is in a working state.

In one embodiment, determining a detection result based on a working mode and an image recognition result comprises:
when the working mode is an internal cutting mode, and the image recognition result is that a boundary of a working area with a relative position is recognized, determining that the detection result is that a target area is detected.

In this embodiment, in an internal cutting mode, an autonomous moving device moves inside a working area. When two boundaries with a relative setting appear in an image of the working area, a position corresponding to the two boundaries may be considered as a position where a target area is located, and it may be determined that the target area is detected. With reference to FIG. 13, a boundary of a target area L comprises a boundary n1, a boundary n2, and a boundary n3. When the autonomous moving device moves to a position A in FIG. 13, the boundary n1 and the boundary n3 with the relative setting may appear in the image of the working area, and thus it may be determined that the target area L is detected. The two boundaries with the relative setting in the target area are not necessarily two parallel boundaries, and may also be two boundaries with a certain included angle.

In one embodiment, controlling a moving path of an autonomous moving device in a target area according to a working mode when a detection result is that the target area is detected comprises:
when a target area is detected and a working mode is an internal cutting mode, controlling a distance between the autonomous moving device and a boundary of the target area to be greater than a first distance.

In this embodiment, in an internal cutting mode, when an autonomous moving device encounters a target area, the autonomous moving device may perform a cutting inside the target area. A distance between the autonomous moving device and a boundary of the target area during the cutting is greater than a first distance, which may prevent the cutting from being performed at the boundary of the target area, and prevent the autonomous moving device from moving out of the boundary and being damaged. The autonomous moving device may perform a cutting on a grass at the boundary in a boundary-following cutting mode. Thus, by combining two modes, a complete and sufficient cutting can be performed on the target area, and a cutting coverage rate is high.

In one embodiment, controlling a distance between an autonomous moving device and a boundary of a target area to be greater than a first distance comprises:
determining a second moving path according to an image of a working area, a distance between the second moving path and the boundary of the target area being greater than the first distance; and
controlling the autonomous moving device to move and/or work according to the second moving path.

In this embodiment, a second moving path may be determined according to an image of a working area when a target area is detected and/or an image of the working area after the target area is detected (for example, a plurality of images captured during a process of approaching the target area). With reference to FIG. 14, a second moving path P may be planned in the target area. A distance between the second moving path P and a boundary of the target area is large, so as to avoid a movement out of the boundary. An autonomous moving device may move forward or backward along the second moving path P. In other embodiments, if a distance between two lateral boundaries of the target area is appropriate, a bow-shaped second moving path may also be planned in the target area, so as to cut a grass inside the target area cleanly without going out of the boundary.

In one embodiment, determining a second moving path according to an image of a working area comprises:
generating a first map according to the image of the working area, the first map comprising map information of a target area; and
determining the second moving path according to the first map.

In this embodiment, a first map may be generated based on a plurality of images of a working area. The first map is a map representing a target area, and is a local map of the working area. The first map may reflect various information (a position, a shape, an angle, etc.) of the target area in detail, sufficiently and completely. A path planning may be performed based on the first map to make a second moving path more accurate. The first map may be adjusted in real time based on a real-time image of the working area.

In one embodiment, controlling a moving path of an autonomous moving device in a target area according to a working mode when a detection result is that the target area is detected comprises:
when a target area is detected and a working mode is an internal cutting mode, determining a width of the target area; and
controlling the moving path of the autonomous moving device in the target area according to the width.

**A** target area has opposite two boundaries. The opposite two boundaries may not be parallel, or may be parallel. A width of the target area refers to a width between the opposite two boundaries. An autonomous moving device may determine the width of the target area according to a collected image of a working area.

After an autonomous moving device detects a target area based on an image, a width of the target area may be determined according to a position of a boundary in the image. Then, a different moving path may be adopted according to the width of the target area.

In one embodiment, controlling a moving path of an autonomous moving device in a target area according to a width comprises:
when the width is not less than a preset reference value, randomly determining a random distance, the preset reference value being less than a threshold;
determining a random moving path according to the random distance and an image of a working area, the random distance representing a distance between the random moving path and a boundary of the target area; and
controlling the autonomous moving device to move and/or work according to the random moving path.

If a width of a target area is less than a threshold, it indicates that the target area is a narrow area. At the same time, if the width of the target area is not less than a preset reference value, it indicates that the target area is a larger narrow area. If the width of the target area is less than the preset reference value, it indicates that the target area is a very small narrow area.

For example, a threshold is 1 meter, and a preset reference value is 0.7 meter. The threshold and the preset reference value may be adjusted according to a user requirement.

When a width is not less than a preset reference value and is less than a threshold, a target area is a slightly larger narrow area. A random distance may be generated based on a random algorithm. The random distance is used for limiting a distance between a side of an autonomous moving device and a boundary of the target area. A specific value of the random distance is random, which may prevent the autonomous moving device from moving along a same path every time in the target area, and prevent a lawn wheel mark caused by a repeated and multiple rolling on the same path, thereby improving a lawn aesthetics and a user experience.

A random distance may be a distance between a random moving path and a boundary located on a left side of an autonomous moving device in a target area, or a distance between the random moving path and a boundary located on a right side of the autonomous moving device in the target area.

In addition, a minimum value may be set for a random distance according to a requirement. For example, a minimum random distance is designed to be 15 cm according to a width of a machine body.

A value range of a random distance may also be set according to a width of a target area.

In one embodiment, controlling a moving path of an autonomous moving device in a target area according to a width comprises:
when a width is less than a preset reference value, determining a middle moving path according to an image of a working area, the middle moving path being located in a middle of opposite two lateral boundaries of the target area; and
controlling the autonomous moving device to move and/or work according to the middle moving path.

When a width is less than a preset reference value, a target area is a very narrow area. At this time, an autonomous moving device may be controlled to move in a middle of two lateral boundaries of the target area, so as to avoid a danger caused by a machine moving beyond a boundary.

In one embodiment, determining a detection result based on a working mode and an image recognition result comprises:
when the working mode is a boundary-following mode, and an image recognition result is that a front boundary is recognized and a lateral boundary is not recognized, determining that the detection result is that a target area is detected, the front boundary being a boundary of a working area located in front of an autonomous moving device, and the lateral boundary being a boundary of the working area located at a side of the autonomous moving device.

In this embodiment, in a boundary-following mode, an autonomous moving device moves and/or works along a boundary of a working area. When a target area is not encountered, the autonomous moving device may move inside the boundary and adjust a moving direction according to a position change of the boundary, so as to accurately follow the boundary and move along the boundary. With reference to FIG. 15, taking an autonomous moving device moving along a boundary in a counterclockwise direction as an example, as shown in a position B, when a target area is not encountered, the autonomous moving device may be located on a left side of the boundary, that is, the boundary is located on a right side of the autonomous moving device. A position of the boundary on the right side of the autonomous moving device may be determined based on an image of the working area. When moving along the boundary in a clockwise direction, the boundary is located on the left side of the autonomous moving device.

If a target area is encountered in a boundary-following mode, because a boundary of the target area has a very large angle change, in a real-time image of a working area obtained by an autonomous moving device, a lateral boundary at a side of the autonomous moving device may suddenly disappear or become discontinuous, and a front boundary located in front of the autonomous moving device may appear. With reference to FIG. 15, taking an autonomous moving device moving along a boundary in a counterclockwise direction as an example, as shown in a position C, in an image of the working area, a lateral boundary followed by the autonomous moving device cannot be recognized, but a front boundary in a forward direction of the autonomous moving device can be recognized, and thus it can be determined that a target area L is detected.

In one embodiment, determining a detection result based on a working mode and an image recognition result comprises:
a working mode is a boundary-following mode, and an image recognition result is that a lateral boundary is recognized, and an image of the lateral boundary meets an image requirement of a target area, determining that the detection result is that the target area is detected, an image requirement of a lateral target area being that the lateral boundary is discontinuous or continuously changing.

In this embodiment, in a boundary-following mode, an autonomous moving device moves and/or works along a boundary of a working area. When a target area is not encountered, the autonomous moving device may move inside the boundary and adjust a moving direction according to a position change of the boundary, so as to accurately follow the boundary and move along the boundary. In the boundary-following mode, a lateral boundary is recognized, and an image of the lateral boundary meets an image requirement of a target area, that is, the lateral boundary in the image is discontinuous or continuously changing. The lateral boundary being discontinuous may be that at least one discontinuous intermediate segment appears in continuously captured images. The lateral boundary in the image continuously changing may be that a situation that at least one discontinuous intermediate segment continuously increases or decreases appears in the continuously captured images.

In one embodiment, determining a detection result based on a working mode and an image recognition result comprises:
the working mode being a boundary-following mode, and an image recognition result being that a front boundary is not recognized within a first predetermined distance and two lateral boundaries are respectively recognized, and at least one of the lateral boundaries is located outside a second predetermined distance, determining that the detection result is that a target area is detected, the front boundary being a boundary of a working area located in front of an autonomous moving device, and the lateral boundary being a boundary of the working area located at a side of the autonomous moving device.

In this embodiment, in a boundary-following mode, an image recognition result is that a front boundary is not recognized within a first predetermined distance and two lateral boundaries are respectively recognized, and at least one lateral boundary is located outside a second predetermined distance, it is determined that a target area is detected. When an autonomous moving device is located on a left side of a boundary, that is, the boundary is located on a right side of the autonomous moving device, in a right boundary-following mode, the image recognition result is that the front boundary is not recognized within the first predetermined distance and the two lateral boundaries are respectively recognized, and a right boundary of the autonomous moving device is located outside the second predetermined distance, it is determined that the target area is detected. When the autonomous moving device is located on a right side of a boundary, that is, the boundary is located on a left side of the autonomous moving device, in a left boundary-following mode, the image recognition result is that the front boundary is not recognized within the first predetermined distance and the two lateral boundaries are respectively recognized, and a left boundary of the autonomous moving device is located outside the second predetermined distance, it is determined that the target area is detected.

A first predetermined distance may be adjusted according to an image recognition range, and may be 50 cm, 55 cm, 60 cm, 65 cm, 70 cm, 75 cm, 80 cm, etc. A second predetermined distance may be adjusted according to an actual width of a machine body and a width of a target area through which a user expects an autonomous moving device to pass, and may be 10 cm, 15 cm, 20 cm, 25 cm, etc. For example, after a target area is recognized, in the target area, an autonomous moving device travels along a right lateral boundary, and a distance between a center line of a right wheel of the autonomous moving device and the right lateral boundary is 20 cm. According to an image recognition result, if a boundary is not recognized within 70 cm in front of the autonomous moving device, the autonomous moving device continues to move and/or work.

In one embodiment, in a case where a detection result is that a target area is detected, controlling a moving path of an autonomous moving device in the target area according to a working mode comprises:
in a case where the target area is detected and the working mode is a boundary-following mode, controlling the autonomous moving device to turn; and
controlling the autonomous moving device to move along a boundary of the target area.

In this embodiment, when a target area is encountered in a boundary-following mode, an autonomous moving device may turn towards the target area, so as to move along a boundary of the target area, improve a cutting coverage rate in the target area, and improve an accuracy of a boundary-following movement.

In one embodiment, in a case where a detection result is that a target area is detected, controlling a moving path of an autonomous moving device in the target area according to a working mode comprises:
in a case where the target area is detected and the working mode is a boundary-following mode, controlling the autonomous moving device to preferentially search for a target path, and when the target path does not exist in the target area, controlling the autonomous moving device to travel along a middle of opposite two lateral boundaries. Specifically, when the autonomous moving device recognizes the target area, the autonomous moving device preferentially searches for the target path. The target path may be a path at a distance of 20 cm from a boundary. If a width in the target area does not meet a requirement, the autonomous moving device is controlled to travel along the middle of the opposite two lateral boundaries of the target area. In one embodiment, controlling the autonomous moving device to turn comprises: controlling the autonomous moving device to turn towards a first boundary of the target area, the first boundary being a boundary with a shortest distance from the autonomous moving device in the target area; and controlling the autonomous moving device to move along the boundary of the target area comprises: controlling the autonomous moving device to move along the first boundary.

In this embodiment, after a target area is detected, an autonomous moving device may turn towards a boundary (a first boundary) with a closer distance in the target area, or may turn towards a direction where a lateral boundary disappears. With reference to FIG. 15, FIG. 16 and FIG. 17, an autonomous moving device moves along a boundary in a counterclockwise direction. When the autonomous moving device is at a position C, a target area L is detected. Then, the autonomous moving device may turn to a right side, so that a moving direction faces a boundary n1. Thus, the autonomous moving device may detect the boundary n1 with its camera when at a position D, and then move along the boundary n1, a boundary n2 and a boundary n3 of the target area (as shown in FIG. 17). During a moving process, a work may be performed to cut a grass at the boundary n1, the boundary n2 and the boundary n3 of the target area, so as to improve a cutting coverage rate, ensure a clean cutting, and improve a user satisfaction. A preset turning duration may be set for a turning process. A turning angle may be a fixed value, or may be adjusted according to an actual situation. A turning manner may be adjusted according to an image detection result during the turning process. The autonomous moving device may stop to perform an in-situ turning, or may perform the turning while moving. A turning action may be performed once or multiple times, and may be adjusted according to the actual situation. After the turning, the first boundary n1 of the target area may be detected based on a real-time image of a working area.

In one embodiment, a turning angle may be determined based on a local map, and the local map may be generated based on an image of a working area.

In one embodiment, controlling an autonomous moving device to move along a boundary of a target area comprises:
determining a third moving path according to an image of a working area, a distance between the third moving path and the boundary of the target area being less than a second distance; and
controlling the autonomous moving device to move according to the third moving path.

In this embodiment, a third moving path is determined according to an image of a working area when a target area is detected and/or an image of the working area after the target area is detected (for example, a plurality of images captured during a turning process). A distance between the third moving path and a boundary of the target area is small. When an autonomous moving device moves according to the third moving path, a distance between the autonomous moving device and the boundary is small, so that the autonomous moving device can accurately follow the boundary, ensure a cutting to a boundary, and improve a cutting coverage rate.

In one embodiment, determining a third moving path according to an image of a working area comprises:
performing a segmentation processing on the image of the working area to determine an image sub-region;
determining, in the image sub-region, a target sub-region that satisfies a preset condition, the preset condition comprising that the image sub-region comprises an image corresponding to a first boundary, or, the preset condition comprising that a distance between a space corresponding to the image sub-region and an autonomous moving device is less than a third distance; and
determining the third moving path according to the target sub-region.

In this embodiment, after a target area is encountered, an autonomous moving device may first move along a first boundary of the target area, and then move along other boundaries of the target area. Since the first boundary is continuous with a boundary followed by the autonomous moving device before encountering the target area, this practice can ensure a continuity of a boundary-following and a high coverage rate of a cutting work.

In this embodiment, a target sub-region is an image region corresponding to a first boundary. Planning a third moving path based on the target sub-region can improve an accuracy of a path and improve a fitness with an actual boundary.

Due to a particularity of a position and a shape of a narrow area, when a robot moves to the narrow area, a lateral boundary will suddenly disappear in an image collected by the robot, and a front boundary will appear in the image. At this time, if a movement is controlled according to the front boundary, an autonomous moving robot will move towards the front boundary, resulting in an inability to move into the narrow area and an inability to perform a cutting on the narrow area. Therefore, in this embodiment, an image is subjected to a segmentation processing to obtain at least two image sub-regions. The image sub-regions are subjected to a screening processing to remove a region related to the front boundary and select a region related to a first boundary (a target sub-region). For example, with reference to FIG. 16, a target sub-region F may be a region close to a bottom side of the image. A length of the target sub-region F in a forward direction may be 3/8 of a length of an entire image in the forward direction. Two sides of the target sub-region F may be aligned with two sides of the image. In addition, in other embodiments, the image may also be divided according to a center line of the image, or, the two sides of the target sub-region may also correspond to two sides of a machine body (or two sides of a cutter head, or two sides of a wheel assembly).

With reference to FIG. 16, a first boundary is detected based on a target sub-region. A boundary may be detected in front of or on a right side of the target sub-region. If a boundary is detected on a left side of the target sub-region, the boundary detected on the left side is ignored. A front of the target sub-region may correspond to a front of a machine body, a right side of the target sub-region may correspond to a right side outside the machine body, and a left side of the target sub-region may correspond to a left side outside the machine body.

In one embodiment, determining a third moving path according to an image sub-region comprises:
generating a second map according to the image sub-region, the second map comprising map information of a target area; and
determining the third moving path according to the second map.

In this embodiment, a second map may be generated based on a respective image sub-region of a plurality of working areas. The second map is a map representing a target area, and is a local map of a working area. The second map may reflect various information (a position, a shape, an angle, etc.) of the target area in detail, sufficiently and completely. A path planning may be performed based on the second map to make a third moving path more accurate. The second map may be adjusted in real time based on a real-time image of the working area.

In one embodiment, when an autonomous moving device recognizes a target area and moves and/or performs a work in the target area, the autonomous moving device continuously detects a lateral boundary. When a boundary is detected on a left side and no boundary is detected on a right side, a robot is controlled to move forward for a certain distance and then turn right. The forward distance may be a preset value or may be automatically determined according to an environment.

In addition, an embodiment is further provided, which is a control apparatus, applied to an autonomous moving device. The autonomous moving device is configured to travel and/or work in a working area. The autonomous moving device is provided with a camera. The control apparatus comprises:
a first determining module, configured to determine a working mode of the autonomous moving device;
a first obtaining module, configured to obtain an image of the working area captured by the camera;
a second determining module, configured to detect a target area and determine a detection result based on the image of the working area, the target area being a local area in the working area, and a distance between two sides of the target area being less than a threshold; and
a control module, configured to, when the detection result is that the target area is detected, control a moving path of the autonomous moving device in the target area according to the working mode.

In addition, an embodiment is further provided, which is a computer-readable storage medium. The storage medium stores a computer program, and the computer program is used for performing the method.

In addition, an embodiment is further provided, which is an autonomous moving device, comprising:
a processor;
a memory for storing processor-executable instructions; and
a processor for performing the method.

To solve technical problems of how to improve a cutting coverage and a user satisfaction, this embodiment provides a control method, which is applied to an autonomous moving device. The autonomous moving device is configured to travel and/or work in a working area, and can also travel and/or work along a boundary of the working area. The control method comprises:
detecting a target area in the working area and determining a detection result, the target area comprising a first boundary and a second boundary, the first boundary and the second boundary being oppositely arranged, and a distance between the first boundary and the second boundary being less than a first threshold;
when the detection result is that the target area is detected, determining a target distance; and
based on the target distance, controlling the autonomous moving device to move along a boundary of the target area, the target distance representing a distance between the autonomous moving device and the boundary of the target area.

This embodiment may be applied to an internal cutting mode or a boundary-following mode of an autonomous moving device. The internal cutting mode refers to performing a cutting inside a working area, and the boundary-following mode refers to moving and/or cutting along a boundary of the working area. The internal cutting mode may be a random cutting mode or a planned cutting mode, and the boundary-following mode may be a boundary-following cutting mode or a boundary-following returning mode. The random cutting mode refers to performing the cutting on an inside of the working area based on a random moving path. The planned cutting mode refers to performing the cutting on the inside of the working area based on a planned moving path. The boundary-following cutting mode refers to moving and cutting along the boundary of the working area. The boundary-following returning mode refers to moving along the boundary of the working area to a charging station.

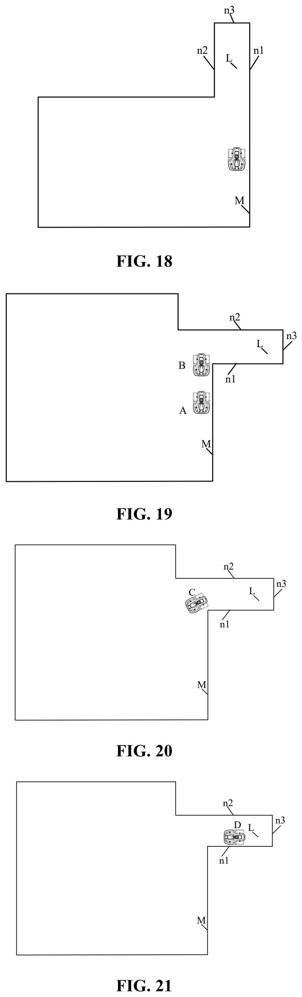

A target area is a part of a working area, and a distance between two lateral boundaries of the target area is less than a first threshold, so that the target area may form a narrow area. The first threshold may be designed according to an actual requirement, and for example, may be 2 meters, 1.8 meters, 1.5 meters, 1.2 meters, or 1 meter, etc. As shown in FIG. 17 and FIG. 18, the working area is an area enclosed by a boundary M, and a target area L may be a narrow area in the working area. A boundary of the target area comprises at least a first boundary n1 and a second boundary n2 that are oppositely arranged. The first boundary n1 and the second boundary n2 may be arranged in parallel, or may not be arranged in parallel. A distance between the first boundary n1 and the second boundary n2 is small. The boundary of the target area may further comprise a boundary n3 located between the first boundary n1 and the second boundary n2. When an autonomous moving device moves and/or works in a narrow area, because a travelable space in the narrow area is very narrow, the autonomous moving device is subject to many space limitations during a process of moving and/or working. If the autonomous moving device moves or works arbitrarily, it is very likely to go out of a boundary or have a collision. If the autonomous moving device ignores the narrow area and does not work in the narrow area, a large area of missed cutting will be caused.

In this embodiment, a target area may be detected based on sensing information during a movement of an autonomous moving device. Optionally, the target area may be detected based on an image recognition technology, or the target area may be detected based on a map and a position of the autonomous moving device, or the target area may be detected based on a magnetic signal near the target area.

If a detection result is that a target area is detected, it indicates that an autonomous moving device is currently moving near or inside the target area. At this time, the autonomous moving device may be controlled to move along a boundary of the target area. For example, with reference to FIG. 17, the autonomous moving device may sequentially move along a boundary n1, a boundary n3, and a boundary n2. In this embodiment, a boundary-following distance when the autonomous moving device moves along the boundary of the target area may also be controlled, so that the boundary-following distance is adapted to the autonomous moving device and the target area, so as to prevent the autonomous moving device from going out of a boundary or colliding when moving and/or working in a narrow area, and a working coverage rate of the autonomous moving device in the narrow area can be improved.

For example, a target distance may be determined according to a size of an autonomous moving device, a length and width information of a target area, a shape of the target area, a working process of the autonomous moving device, an instruction of a user, etc. An actual distance between the autonomous moving device and a boundary may be determined based on a sensor information (such as an image information, a radar information), and a movement of the autonomous moving device is controlled, so that the actual distance between the autonomous moving device and the boundary of the target area is maintained at the target distance.

In one embodiment, determining a target distance comprises:
determining a width of a target area; and
determining the target distance according to the width of the target area.

In this embodiment, a target distance may be determined according to a width of a target area, wherein the width of the target area may represent a distance between a first boundary and a second boundary in the target area. For example, when a width is large, the target distance may be large, and when a width is small, the target distance may be small. In this embodiment, by adjusting the target distance, a space on a side of an autonomous moving device away from a followed boundary can be increased, so as to provide more space for a movement or a turning of the autonomous moving device, avoid going out of a boundary or a collision, and ensure that the autonomous moving device can safely move and/or work in a narrow target area.

In one embodiment, an autonomous moving device is provided with a camera, and the camera is configured to capture an image of a working area;
detecting a target area in the working area and determining a detection result comprises:
obtaining an image of the working area; and
determining the detection result according to the image of the working area.

In one embodiment, detecting a target area in a working area and determining a detection result comprises:
when controlling an autonomous moving device to move along a boundary of the working area, detecting the target area in the working area and determining the detection result.

In one embodiment, a control method further comprises:
when a detection result is that a target area is not detected, determining a third distance; and
based on the third distance, controlling an autonomous moving device to move along a boundary of a working area, the third distance being greater than or equal to a target distance.

In one embodiment, determining a third distance comprises:
determining a reference information, the reference information comprising one or more of a user instruction information, a working mode information of an autonomous moving device, and a working process information of the autonomous moving device; and
determining the third distance according to the reference information.

An autonomous moving device in this embodiment is provided with a camera. The camera may be provided at a front part of the autonomous moving device. The camera may capture an image in real time. The autonomous moving device may detect an obstacle and/or a boundary based on the camera. When the obstacle is detected, the autonomous moving device may move around the obstacle. The autonomous moving device may also move along the boundary according to a detected boundary. The autonomous moving device may also determine a moving direction based on an image acquired by the camera, and move based on the moving direction. The autonomous moving device may be a front-wheel drive machine (a driving wheel is located at a front part of the machine), or a rear-wheel drive machine (a driving wheel is located at a rear part of the machine). The autonomous moving device may perform a counterclockwise boundary-following movement, or a clockwise boundary-following movement.

In this embodiment, an autonomous moving device may be controlled to move and/or work along a boundary. During a movement, a distance between the autonomous moving device and the boundary may be maintained at a third distance. At the same time, a target area may be detected. The target area may be detected in real time based on an image captured by a camera. If the target area is not detected, the autonomous moving device continues to move along the boundary based on the third distance. If the target area is detected, the autonomous moving device may move along a boundary of the target area based on a target distance. For example, the third distance may be 10 cm, 12 cm, 15 cm, 20 cm, etc. A moving direction, a distance or an angle during a boundary-following movement may be determined based on a real-time image. Alternatively, a local map may be generated based on a plurality of frames of images, a path planning is performed based on the local map, and a movement is performed based on a planned path.

When a target area is not detected, moving along a boundary based on a third distance. For example, a user may set a boundary-following parameter on an APP according to an actual requirement. The APP generates a user instruction information based on the boundary-following parameter and sends the user instruction information to an autonomous moving device. The autonomous moving device may determine the third distance according to the user instruction information. For example, the third distance may be determined according to a working mode information. For example, in a boundary-following cutting mode, the third distance is small, and in a boundary-following returning mode, the third distance may be slightly large. For example, the third distance may be determined according to a working process information, for example, the third distance may be determined according to a working duration or a number of times of working.

In one embodiment, a control method further comprises:
detecting a lateral boundary when controlling an autonomous moving device to move along a boundary of a working area, the lateral boundary being a boundary of the working area located at a side of the autonomous moving device; and
when the lateral boundary is not detected or the lateral boundary is detected to be discontinuous, controlling the autonomous moving device to turn, so that the autonomous moving device moves in a direction where a target area is located.

With reference to FIG. 19 to FIG. 21, in the figures, an autonomous moving device moves along a boundary in a counterclockwise direction, and the boundary is located at a side of the autonomous moving device. As shown in a position A, at the position A, the autonomous moving device detects a lateral boundary based on an image and moves and/or works along the lateral boundary. During a movement, a third distance is maintained between the autonomous moving device and the lateral boundary. As the autonomous moving device moves, the autonomous moving device detects that the lateral boundary is discontinuous or the lateral boundary suddenly disappears, which indicates that the lateral boundary may extend to a right side to form a corner, and may further form a narrow target area L. At a position B, the autonomous moving device does not detect the lateral boundary or detects that the lateral boundary is discontinuous based on the image. The autonomous moving device may turn (for example, rotate in place or rotate while moving), and turn and move in a direction where the target area L is located. For example, the autonomous moving device may start from the position B to perform an arc movement in an arc trajectory, and move to a position C. During the arc movement, a left wheel and a right wheel of the autonomous moving device may be controlled to rotate at different speeds, so as to realize the arc movement, which not only can cut a grass at the corner cleanly, but also can prevent a machine from going out of a boundary or colliding. The autonomous moving device may also detect the target area during the arc movement. If the target area is detected, the autonomous moving device may move along the boundary according to a target distance, as shown in a position D.

In one embodiment, when an autonomous moving device encounters a corner, a captured image may capture a front boundary located in front. The autonomous moving device may ignore the front boundary and perform an arc movement, so as to enter an area at a side of the corner (which may be a narrow area), so as to prevent the autonomous moving device from directly moving to a vicinity of the front boundary, thereby avoiding a missed cutting.

In one embodiment, a working area is as shown in FIG. 18. An autonomous moving device moves along a boundary in a counterclockwise direction. The autonomous moving device may detect a target area while moving along the boundary. The autonomous moving device does not encounter a corner before detecting a target area L, and thus does not need to perform an arc movement or a turning.

In one embodiment, determining a detection result according to an image of a working area comprises:
determining a non-grass area according to the image of the working area;
determining a feature information of the non-grass area, the feature information comprising one or more of a position, a shape, and an area; and
determining the detection result according to the feature information of the non-grass area.

In one embodiment, determining a detection result according to a feature information of a non-grass area comprises:
when the non-grass area in an image satisfies a first condition, determining that the detection result is that a target area is detected, the first condition comprising that at least two non-grass areas are oppositely arranged and have a strip shape.

In this embodiment, an image may be subjected to an image recognition processing to determine a grass area and a non-grass area. In a plurality of regions of the image, if two strip-shaped non-grass areas are oppositely arranged, it may be determined that a detection result is that a target area is detected. Alternatively, in a plurality of regions of the image, if a shape of a non-grass area is adapted to a shape of a narrow area, it may be determined that a detection result is that a target area is detected. A width of the target area may also be determined based on an image recognition and a distance calibration technology.

A detection result may be determined according to an image recognition result of a plurality of images. For example, if a non-grass area that satisfies a first condition is detected in 50 consecutive frames of images, it is determined that a detection result is that a target area is detected.

In other embodiments, a local map may also be generated according to an image, a detection result is determined based on the local map, and a width of a target area may also be determined based on the local map.

With reference to FIG. 7, when a detection result is that a target area is detected, an autonomous moving device is controlled to move along a boundary of the target area, and a target distance is maintained between the autonomous moving device and the boundary of the target area. The target distance may be determined according to a width of the target area.

In one embodiment, determining a target distance according to a width of a target area comprises:
when the width of the target area is not less than a second threshold, determining a fourth distance as the target distance, the second threshold being less than a first threshold; and
when the width of the target area is less than the second threshold, determining a fifth distance as the target distance, the fifth distance being less than the fourth distance.

In one embodiment, a method further comprises:
when a width of a target area is less than a third threshold, controlling an autonomous moving device to turn to be away from the target area, the third threshold being less than a second threshold.

A second threshold and a third threshold may be designed according to an actual requirement and a size of an autonomous moving device. In this embodiment, a width of the autonomous moving device may be 45 cm. If a width of a target area is less than a first threshold and not less than a second threshold, it indicates that a width of a narrow area is slightly large. Then, a fourth distance is determined as a target distance. For example, the first threshold is 1.5 meters, the second threshold is 0.95 meter, a third distance is 15 cm, and the fourth distance is 15 cm. If the width of the target area is less than the second threshold and not less than a third threshold, it indicates that the width of the narrow area is slightly small. Then, a fifth distance is determined as the target distance. For example, the second threshold is 0.95 meter, the third threshold is 0.65 meter, the fifth distance is 10 cm, and the fourth distance is 15 cm. If the width of the target area is less than the third threshold, it indicates that the width of the narrow area is too narrow for the autonomous moving device to pass through, otherwise the autonomous moving device may go out of a boundary or collide, making it difficult to ensure a safety. Therefore, the autonomous moving device may be controlled to turn (or move backward, turn around, or pause).

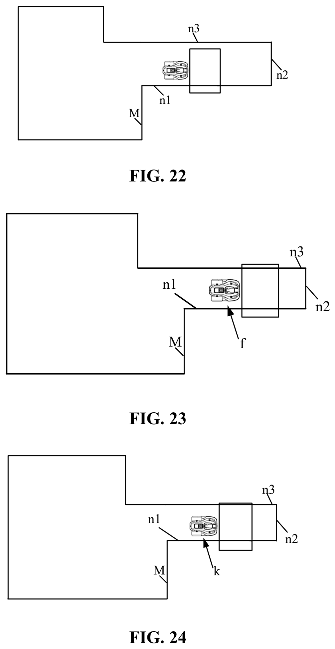

With reference to FIG. 22, when a width of a narrow area is slightly large (e.g., 1 m), in this embodiment, when moving along a boundary n1 of the narrow area based on a fourth distance (e.g., 15 cm), since a field of view of a camera is limited, the camera may not be able to capture a boundary n3, or even if the boundary n3 is captured, a distance between the boundary n3 and an autonomous moving device can be determined to be large according to an image. Therefore, the autonomous moving device can smoothly move along the boundary n1, and a left side of the autonomous moving device has a large space, which will not hinder a movement of a machine.

With reference to FIG. 23, when a width of a narrow area is slightly small (e.g., 0.8 m or 0.7 m), if moving along a boundary n1 of the narrow area still based on a large boundary-following distance (as shown by f in the figure), a distance between a boundary n3 and an autonomous moving device is small, which is very likely to cause a machine to collide or go out of a boundary. An autonomous moving device may recognize the boundary n3 based on an image, and may calculate a distance between the boundary n3 and the machine according to the image.

With reference to FIG. 24, when a width of a narrow area is slightly small (e.g., 0.8 m or 0.7 m), in this embodiment, moving along a boundary n1 of the narrow area based on a fifth distance (as shown by k in the figure) can increase a distance between a boundary n3 and an autonomous moving device, so as to avoid a machine collision or going out of a boundary. For example, the fifth distance may be 10 cm. It can be seen that an autonomous moving device in this embodiment can move and/or work in narrow areas with different widths. In a boundary-following cutting mode, various narrow areas can be cut to a greatest extent, so as to ensure a clean cutting and avoid going out of a boundary or a collision. In a boundary-following returning mode, various narrow areas can be accurately, timely, efficiently and safely moved along a boundary, so as to avoid a loss of a boundary and accurately return to a charging station.

In addition, an embodiment is further provided, which is a control apparatus, applied to an autonomous moving device. The autonomous moving device is configured to move and/or work in a working area. The control apparatus comprises:
a detection module, configured to detect a target area in the working area and determine a detection result, the target area comprising a first boundary and a second boundary, the first boundary and the second boundary being oppositely arranged, and a distance between the first boundary and the second boundary being less than a first threshold;
a determining module, configured to, when the detection result is that the target area is detected, determine a target distance; and
a control module, configured to, based on the target distance, control the autonomous moving device to move along a boundary of the target area, the target distance representing a distance between the autonomous moving device and the boundary of the target area.

In addition, an embodiment is further provided, which is a computer-readable storage medium. The storage medium stores a computer program, and the computer program is used for performing the method.

In addition, an embodiment is further provided, which is an autonomous moving device, comprising:
a processor;
a memory for storing processor-executable instructions; and
a processor for performing the method.

Technical features of the above embodiments may be arbitrarily combined. To make a description concise, not all possible combinations of the technical features in the above embodiments are described. However, as long as a combination of these technical features does not conflict, the combination should be considered to be within a scope of this specification.

The above embodiments only express several implementation manners of the present application, and a description thereof is specific and detailed, but should not be understood as a limitation on a patent scope of the present application. It should be noted that, for those of ordinary skill in the art, several modifications and improvements may be made without departing from a concept of the present application, and these modifications and improvements all fall within a protection scope of the present application.

Technical features of the above embodiments may be arbitrarily combined. To make a description concise, not all possible combinations of the technical features in the above embodiments are described. However, as long as a combination of these technical features does not conflict, the combination should be considered to be within a scope of this specification.

The above embodiments only express several implementation manners of the present application, and a description thereof is specific and detailed, but should not be understood as a limitation on a patent scope of the present application. It should be noted that, for those of ordinary skill in the art, several modifications and improvements may be made without departing from a concept of the present application, and these modifications and improvements all fall within a protection scope of the present application.

## Claims

1. A control method for an autonomous moving device, the autonomous moving device being configured to travel and/or work in a working area, wherein the control method comprises:
obtaining an image of the working area;
detecting a target area in the working area based on the image, the target area being a local area in the working area, and a distance between opposite sides of the target area being less than a threshold;
determining a width of the target area; and
controlling an angle and/or a distance between the autonomous moving device and a boundary of the target area based on the width of the target area.

2. The control method according to claim 1, wherein the control method comprises:
determining a working mode of the autonomous moving device;
the controlling a moving path between the autonomous moving device and the boundary of the target area based on the width of the target area comprises:
controlling the angle and/or the distance between the autonomous moving device and the boundary of the target area based on whether the width of the target area satisfies a width requirement corresponding to the working mode.

3. The control method according to claim 2, wherein the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is not less than a first preset value, controlling the autonomous moving device to move along the boundary of the target area according to a first moving path, a distance between the first moving path and the boundary of the target area being less than or equal to a first distance.

4. The control method according to claim 2, wherein the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is less than a first preset value and greater than or equal to a second preset value, controlling the autonomous moving device to move along a middle position between opposite two lateral boundaries of the target area.

5. The control method according to claim 2, wherein the controlling the angle and/or the distance between the autonomous moving device and the boundary of the target area based on whether the width of the target area satisfies the width requirement corresponding to the working mode comprises:
when the autonomous moving device is in a boundary-following mode, and when the width of the target area is less than a second preset value, controlling the autonomous moving device to leave the target area.

6. The control method according to claim 2, wherein the controlling the angle and/or the distance between the autonomous moving device and the boundary of the target area based on whether the width of the target area satisfies the width requirement corresponding to the working mode comprises:
when the autonomous moving device is in an internal cutting mode, and when the width of the target area is not less than a third preset value, controlling the autonomous moving device to move within the target area according to a random moving path or a planned moving path.

7. The control method according to claim 2, wherein the controlling the angle and/or the distance between the autonomous moving device and the boundary of the target area based on whether the width of the target area satisfies the width requirement corresponding to the working mode comprises:
when the autonomous moving device is in an internal cutting mode, and when a width is less than a third preset value and greater than or equal to a fourth preset value, determining a boundary-following distance;
determining a boundary-approaching path according to the boundary-following distance, the boundary-following distance representing a distance between the boundary-approaching path and the boundary of the target area; and
controlling the autonomous moving device to move and/or work according to the boundary-approaching path.

8. The control method according to claim 7, wherein the boundary-following distance is variably selected within a certain width range.

9. The control method according to claim 2, wherein the controlling the angle and/or the distance between the autonomous moving device and the boundary of the target area based on whether the width of the target area satisfies the width requirement corresponding to the working mode comprises:
when the autonomous moving device is in an internal cutting mode, and when the width of the target area is less than a fourth preset value, controlling the autonomous moving device to leave the target area.

10. The control method according to claim 2, wherein the controlling the angle and/or the distance between the autonomous moving device and the boundary of the target area based on whether the width of the target area satisfies the width requirement corresponding to the working mode comprises:
when the working mode is an internal cutting mode, and when the width of the target area is not less than a third preset value, controlling the autonomous moving device to turn at an angle within a first angle range when approaching or reaching the boundary of the target area, an upper limit value of the first angle range being less than an upper limit value of a second angle range, the second angle range being an angle range selected for the autonomous moving device to turn when approaching or reaching a boundary of a non-target area.

11. The control method according to claim 10, wherein the controlling the angle and/or the distance between the autonomous moving device and the boundary of the target area based on whether the width of the target area satisfies the width requirement corresponding to the working mode further comprises:
when the working mode is an internal cutting mode, and when the width of the target area is not less than a third preset value, controlling the autonomous moving device to move in the target area according to a random moving path;
detecting a first positional relationship between the autonomous moving device and the boundary of the target area based on the image;
determining whether the autonomous moving device satisfies a predetermined boundary-approaching condition based on the first positional relationship, and if a determination result is yes, controlling the autonomous moving device to turn at an angle in the first angle range to move away from the boundary of the working area;
detecting a second positional relationship between the autonomous moving device after moving away from the boundary of the target area and the boundary of the target area based on the image; and
determining whether the autonomous moving device satisfies the predetermined boundary-approaching condition based on the second positional relationship, and if a determination result is yes, controlling the autonomous moving device to turn at an angle in a third angle range to move away from the boundary of the target area, wherein an upper limit value of the third angle range is less than the upper limit value of the first angle range.

12. The control method according to claim 1, wherein the controlling the angle and/or the distance between the autonomous moving device and the boundary of the target area based on the width of the target area comprises:
when the width of the target area is greater than or equal to an enterable preset value, controlling the autonomous moving device to enter the target area; and
when the width of the target area is less than the enterable preset value, controlling the autonomous moving device not to enter the target area.

13. The control method according to claim 12, wherein the control method further comprises:
detecting a boundary of the working area based on the image; and
determining whether the width of the target area is greater than or equal to the enterable preset value based on the boundary of the working area.

14. The control method according to claim 13, wherein the determining whether the width of the target area is greater than or equal to the enterable preset value based on the boundary of the working area comprises:
identifying that a lateral boundary of the working area is discontinuous, a distance between the discontinuous lateral boundary representing the width of the target area, the lateral boundary being a boundary of the working area along which the autonomous moving device moves.

15. The control method according to claim 14, wherein the control method further comprises: when the distance between the discontinuous lateral boundary is less than an enterable preset value, controlling the autonomous moving device to move based on the lateral boundary after an interruption.

16. The control method according to claim 13, wherein the determining whether the width of the target area is greater than or equal to an enterable preset value based on the boundary of the working area comprises:
identifying opposite two lateral boundaries in the working area, a distance between the two lateral boundaries representing the width of the target area, the opposite lateral boundaries being boundaries of the working area located on two sides in a width direction of the autonomous moving device.

17. The control method according to any one of claims 1-11, wherein the control method comprises:
determining the width of the target area;
the determining the width of the target area comprises: identifying the width of the target area based on an image of the working area.

18. The control method according to claim 17, wherein the identifying the width of the target area based on the image of the working area comprises:
detecting a boundary of the working area based on the image; and identifying the width of the target area based on a distance between opposite lateral boundaries, the lateral boundaries being boundaries of the working area located at a side of the autonomous moving device.

19. The control method according to any one of claims 1-11, wherein the control method comprises:
determining the width of the target area;
the determining the width of the target area comprises: detecting a number of turns of the autonomous moving device in the target area within a certain period of time, and comparing the number of turns with a preset number threshold to identify the width of the target area.

20. An autonomous moving device, the autonomous moving device being configured to travel and/or work in a working area, wherein the autonomous moving device comprises:
an imaging sensor, configured to capture an image of the working area; and
a controller, configured to obtain the image of the working area, and detect a target area in the working area based on the image, the target area being a local area in the working area, and a distance between opposite sides of the target area being less than a threshold;
the controller is further configured to determine a width of the target area, and control an angle and/or a distance between the autonomous moving device and a boundary of the target area based on the width of the target area.

21. A computer-readable storage medium, wherein the storage medium stores a computer program, the computer program being configured to perform the method according to any one of claims 1 to 19.
